# EUROPEAN PATENT APPLICATION

(11) **EP 4 552 504 A1**
(43) Date of publication of application: **14.05.2025**
(21) Application number: 24211854.5
(22) Date of filing: 08.11.2024
(51) Int. Cl.: A21D 13/19, A21D 8/02

(54) **INDUSTRIAL PRODUCTION PROCESS FOR FILLED LAMINATED DOUGH PRODUCTS**

(30) Priority: 10.11.2023 EP 23209012
(71) Applicant: Vamix N.V., 9000 Gent (BE)
(72) Inventor: Josse, Thomas, 35370 Torce (FR); Beirinckx, Nele, 9000 Gent (BE); Benon, Marina, 35370 Torce (FR)
(74) Representative: De Clercq & Partners

(57) **Abstract**

The present invention relates to an industrial process for continuously producing a filled laminated dough product, to a production line for conducting the method, and to filled laminated dough products obtained by the method. The filled laminated dough products are characterised by favourable properties such as an excellent mouthfeel.

## Description

### FIELD OF THE INVENTION

The present invention relates to an industrial process for continuous production of filled laminated dough products, and products obtained by performing the method such as galette des rois (king cake). A further aspect of the invention is related to a production line for continuously producing laminated dough products according to the method of the invention.

### BACKGROUND OF THE INVENTION

In the group of filled laminated dough products, a hallmark food product consumed upon celebrating Epiphany is the King cake ("galette de rois"). While the exact form and ingredients are variable, a King cake is typically characterised as a laminated dough food product ("puff pastry"), which comprises a bottom laminated dough layer, a top laminated dough layer, and a central filling which optionally contains a hidden figurine or bean. To date, the most popular filling is a frangipane filling but essentially any filling can be present and the constituents thereof are merely limited by the imagination of the producer and consumer.

The popularity of the King cake has resulted in extraordinary volumes of the pastry being sold every year. For example, in France, approximately 30 million King cakes are sold annually despite their limited availability in most retail warehouses during the Epiphany holiday. To keep up with the increasing demand, industrial processes have been developed to produce raw, ready-to-bake filled laminated dough products which can then be stored in refrigerators or freezers before baking. In a typical production process, the bottom and top dough layer are excised from a single piece of laminated dough and have substantially the same thickness in the raw, ready-to-bake laminated food product.

Next to King Cake, other filled laminated dough products such as sweet pie ("tourte sucrée"), savory pie ("tourte salée"), (apple) turnovers ("chaussons (aux pommes)") , and pithiviers enjoy a regional and often a spreading global popularity. Notwithstanding the popularity of these food products, in practice some consumers experience the mouthfeel of a typical King cake or other filled laminated dough products to be suboptimal, which is often attributed to a less crispy, dense, and/or moist top dough layer. This problem cannot be readily resolved by merely baking the product for an extended period of time since this results in a dry top layer, which also negatively impacts consumer evaluation.

There is thus a need to solve the above problem to improve filled laminated dough products and provide scalable and efficient industrial production methods for filled laminated dough products such as King cake that have excellent mouthfeel to cater to the demands of consumers worldwide in terms of volume and quality.

### SUMMARY OF THE INVENTION

By means of extensive experimentation, the inventors have found that by adjusting the relative thickness of the bottom laminated dough layer (piece) compared to the top laminated dough layer (piece), improved filled laminated dough products can be obtained. Indeed, unexpectedly, using a bottom laminated dough layer that has a thickness which is less than the top laminated dough layer in the raw, ready-to-bake laminated food product greatly benefits the quality of the baked product, which is characterised by an improved crispy mouthfeel. In addition, the filled laminated dough products are more voluminous due to increased development of the puff pastry. Moreover, the change in bottom dough layer enables baking the filled laminated dough product in such a manner that excellent mouthfeel can be achieved while maintaining a baking process that results in excellent visual appearance of any decorative markings ("scratching" or "rayage") on the top laminated dough layer.

Overall, the quality of the resulting food product is not affected by the thinner laminated dough layer since the lamination of the dough is not expressed during cooking: the puff pastry is blocked under its lower surface by the cooking plate and by the filling on its upper face. Transferring part of the thickness of the lower laminated dough layer to the upper laminated dough layer helps to maximize the quality of the final food product.

The invention therefore provides the following aspects:
Aspect 1. A method or process (1, 10) for producing a (raw, ready-to-bake) filled laminated dough product (9, 330) having an upper (202' or 212') and lower (201' or 211') laminated dough piece, and a filling (7) in-between said dough pieces, comprising the steps of:
   - providing a first laminated dough piece (201' or 211') and a second laminating dough piece (202' or 212') having an equal surface area, wherein the thickness (62 or 602) (i.e. the height) of the first laminated (201' or 211') dough piece is less than the thickness (61 or 601) of the second laminated dough piece (202' or 212');
   - providing a filling composition (7) on the first laminated dough piece (201' or 211'), and covering the filling composition with the second laminated dough piece (202' or 212') to obtain said laminated dough product (9, 330).
   In a preferred embodiment, said method can be artisanal, a semi-, or fully automatic, a semi-, or fully-industrial and/or a semi- or fully-continuous method.
Aspect 2. The method according to aspect 1, wherein the thickness (62 or 602) (i.e. the height) of the first laminated dough piece (201' , 211' or 311') is at least about 5%, preferably at least about 10%, more preferably at least about 20%, more preferably at least about 30%, more preferably at least about 40%, more preferably at least about 50% less when compared to the thickness (61 or 601) of the second laminated dough piece (202' ,212' or 312).
Aspect 3. The method according to aspect 1 or 2, wherein the first and second laminated dough pieces are obtained by the steps of:
   (i) providing a laminated dough piece (2 20 or 301);
   (iia) laterally dividing said laminated dough piece (2) into a first laminated dough piece (211) and a second laminated dough piece (212), wherein the surface area of said first laminated dough piece is smaller than the surface area of the second laminated dough piece, and reducing the first laminated dough piece and the second laminated dough pieces to an equal final surface area (231 and 232) for said laminated dough product by means of one or more calibrators, transverse calibrators or multirollers (4); or
   (iib) dividing the laminated dough piece (20) into a first laminated dough piece (201) and a second laminated dough piece (202), and folding the second laminated dough piece (202) at least once to obtain a second laminated dough piece that has an equal surface area and shape as the first laminated dough piece (201), thereby obtaining a first laminated dough piece having a thickness (602) that is at least about 5%, preferably at least about 10%, more preferably at least about 20%, more preferably at least about 30%, more preferably at least about 40%, more preferably at least about 50% less when compared to the thickness (601) of the second laminated dough piece (202); or
   (iic) asymmetrically cutting said dough piece longitudinally (i.e. parallel to the transport direction (302)) by one or more cutting means (303) into a first laminated dough piece (311) and a second laminated dough piece (312), wherein the second laminated dough piece (312) has a width (304) that is wider than the width (305) of the first laminated dough piece (311);
      separating said two dough pieces from each other (i.e. transporting them separately);
      reducing the first laminated dough piece (311) by one or more transverse calibrators (306 and 306') rolling over the dough in a direction (307 and 307') substantially perpendicular to the direction of transport (302) of the dough piece, thereby reducing said first laminated dough piece (311) in thickness and widening it to approximately the same width (304) of the second laminated dough piece, resulting in a reduced first laminated dough piece (311') having a thickness that is reduced by at least about 5%, preferably at least about 10%, more preferably at least about 20%, more preferably at least about 30%, more preferably at least about 40%, more preferably at least about 50% when compared to the thickness of the second laminated dough piece (312).
   To explain embodiments (iia and iic) in more detail, although the number of fat layers of the first and second laminated dough pieces is the same, the first laminated dough layer is reduced more in order to have a reduced thickness, while maintaining the same number of laminated dough layers.
   To explain embodiment (iib) in more detail, the number of fat layers is the first laminated dough piece is double or triple the number of fat layers in the second laminated dough piece, resulting in a difference in thickness between said first and second dough piece. This can be done through folding, but can also be done through simple stacking of cut pieces, wherein for example the bottom layer will have 2 stacked layers, while the top layer will have 3 stacked layers, resulting in a 33% difference in thickness between the bottom and top dough layers, without the need of further reduction. Any other combination of e.g. 1 layer vs. 2 layers, leading to a 50% difference in layer thickness, or 3 layers vs. 4 layers, resulting in a 25% difference in layer thickness can be obtained, again without the need for further reduction of the stacked layers. A person skilled in the art would be ablet o extrapolate different schemes to arrive at different percentages of difference in thickness.
   In any one of (iia), (iib), or (iic), the difference in thickness is preferably somewhere between 5% and 50%, preferably between 5% and 35%. Such as about 8%, about 10%, about 15%, 20%, 25%, 30%, preferably from 8% to 33%, from 8% to 25%, from 8% to 20%, from 8% to 15%, or from 10% to 33%, from 10% to 25%, from 10% to 20%, from 10% to 15%.
Aspect 4. The method of any one of aspects 1 to 3, wherein said final filled laminated dough product is produced by:
   - depositing the filling on the thinner first laminated dough piece (311');
   - covering the latter with the (non-reduced) second laminated dough piece (312);
   - performing a cut through the second laminated dough piece (312), filling (310) and reduced first laminated dough piece (311'),
   thereby forming the final filled laminated dough product (330), having a bottom laminated dough layer (311') that is less thick than the upper laminated dough layer (312). Said cut defines the shape of the final product and can be circular, round, oval, square, triangular, or D-, moon-, nut-, star- or cloud-shape
Aspect 5. A (semi-)automatic, (semi-)industrial and/or (semi-)continuous method (1, 10) for producing a (raw, ready-to-bake) filled laminated dough product (9, 330) having an upper and lower laminated dough piece, and a filling (7) in-between said dough pieces, comprising the steps of:
   - providing a first dough piece obtained by reworking waste laminated dough (also called "rognure") and forming it into the first piece of dough, optionally by reworking waste laminated dough and forming it into a first laminated dough piece.
   - providing a second laminating dough piece having a substantially equal surface area to the first, optionally laminated, dough piece, wherein the thickness (i.e. the height) of the first, optionally laminated, dough piece is less than the thickness of the second laminated dough piece;
   - providing a filling composition on the first optionally laminated dough piece, and covering the filling composition with the second laminated dough piece to obtain said (raw, ready-to-bake) filled laminated dough product.
Aspect 6. The method according to any one of claims 1 to 4, wherein at least part of the waste laminated dough after cutting out the final dough product is used as rework and is re-fed into the dough kneading means and mixed with the standard dough ingredients (flour, water, salt,...). In certain embodiments, the rework part can be fed in a ratio of 10, 15, 20, 25, 30, 35, 40, 45, or of up to 50% to even 100% of the standard dough ingredients.
Aspect 7. The method according to any one of the preceding aspects, wherein the (raw, ready-to-bake) filled laminated dough product (9, 330) has a substantially symmetrical shape.
Aspect 8. The method according to aspect 7, wherein the (raw, ready-to-bake) filled laminated dough product (9, 330) has a substantially circular, rectangular, square, or elliptical shape.
Aspect 9. The method according to any one of the preceding aspects, wherein the (raw, ready-to-bake) filled laminated dough product (9, 330) having a filling is a king cake ("galette de rois") or a(n apple) turnover.
Aspect 10. The method according to any one of aspects 3, 7, or 8, wherein in (iia) prior to reducing the laminated dough piece (2) is laterally divided such that the surface area of the first laminated dough piece (211) is at least 5%, preferably at least 10%, more preferably at least 20%, most preferably at least 30% smaller than the surface area of the second laminated dough piece (212).
Aspect 11. The method according to any one of the preceding aspects, wherein the method further comprises a step of providing an incision or drawing ("*rayage*") on the second laminated dough piece (202' or 212').
Aspect 12. The method according to any one of the preceding aspects, wherein the method further comprises a step of glazing or egg-washing of the second laminated dough piece (202' 212' or 312).
Aspect 13. The method according to any one of the preceding aspects, wherein the method further comprises a step of freezing the (raw, ready-to-bake) filled laminated dough product (9, 330), thereby obtaining a frozen ready-to-bake laminated dough product; and/or wherein the method further comprises a step of baking the raw or frozen laminated dough product, thereby obtaining a baked laminated dough product.
Aspect 14. The method according to any one of the preceding aspects, wherein the first (201' 211' or 311') and/or second (202' 212' or 312) laminated dough piece comprises at least 64 fat composition layers, preferably at least 96 fat composition layers, more preferably 144 and even up to 216 layers.
Aspect 15. The method according to aspect 3, (iib), wherein the second laminated dough piece (202') comprises at least double the amount of fat composition layers when compared to the first laminated dough piece (201').
Aspect 16. The method according to any one of the preceding aspects, wherein the first (201' 211' or 311') and/or second (202' 212' or 312) laminated dough piece comprises 216 fat composition layers or less.
Aspect 17. The method according to any one of aspects 10 to 16, wherein the step of laterally dividing said laminated dough piece occurs by means of an asymmetrical cut using one or more cutting means (31, 32, 33, 34, 35, or 303).
Aspect 18. The method according to any one of aspects 3, or 7 to 17, wherein the laminated dough piece of step (i) is provided by the steps of:
   (11) providing a base dough composition ("détrempe");
   (i2) extruding said base dough composition through an extruder to obtain a strip of dough;
   (i3) reducing said strip of dough by means of one or more calibrators or multirollers;
   (i4) dividing the reduced strip of dough into two distinct strips of dough e.g. by means of a cutting means;
   (i5) extruding a fat composition and depositing said fat composition between the two separate strips of dough to obtain a dough-fat-dough composition;
   (i6) reducing said dough-fat-dough composition by means of one or more calibrators or multirollers, folding said composition into a laminated dough piece (2, 20, 301), and where needed repeating step (i6) one, two, or three times depending on the number of layers and thickness required.
Aspect 19. The method according to any one of the preceding aspects, wherein the laminated dough piece is a reversed laminated dough piece ("feuilletage inversé product").
Aspect 20. The method according to aspect 18 or 19, wherein the base dough comprises flour, water, and salt, preferably wherein the base dough essentially consists of flour, water, and salt.
Aspect 21. The method according to any one of aspects 18 to 20, wherein the method comprises successive steps of reducing the strip of dough by one or more calibrators, one or more (transverse) calibrators or one or more multirollers or combinations thereof.
Aspect 22. The method according to any one of aspects 18 to 21, wherein the step of extruding a fat composition and depositing said fat composition between the dough further comprises conjoining the at least two separate strips of dough.
Aspect 23. The method according to any one of aspects 18 to 22, wherein the dough-fat-dough layer is folded by at one or more folding (i.e. tiling and/or stacking) stations, wherein in each station the dough-fat-dough layer is folded at least two, three or four times, preferably wherein at least two, three or four folding (i.e. tiling) stations are used to obtain the final laminated dough piece or strip.
Aspect 24. The method according to any one of the preceding aspects, wherein the filling composition (7) is a sweet or savoury composition, preferably wherein the filling composition is a frangipane filling, caramel-frangipane filling, caramel filling, almond cream filling, apple pieces and/or apple compote filling, Custard cream filling, chocolate filling, or other fruit (compote) filling composition, or any other type of filling.
Aspect 25. A raw (or ready to bake) filled laminated dough product (9, 330) having a filling (7), comprising a filling composition enclosed between a top laminated dough piece (212' 202' or 312) and a bottom laminated dough piece (211' 201' or 311'), wherein the bottom laminated dough piece is thinner when compared to the top laminated dough piece.
Aspect 26. The raw (or ready to bake) filled laminated dough product (9, 330) according to aspect 25, wherein the top laminated dough piece and the bottom laminated dough piece comprise an equal number of fat layers.
Aspect 27. The raw (or ready to bake) filled laminated dough product (9, 330) according to aspect 25 or 26, selected from the group consisting of: king cake ("galette de rois"), sweet pie ("tourte sucrée"), savory pie ("tourte salée"), Grillés (aux pomme), turnovers having a filling selected from the group of: frangipane filling, caramel-frangipane filling, caramel filling, almond cream filling, apple pieces and/or apple compote filling, Custard cream filling, chocolate filling, and other fruit (compote) filling composition, more preferably an apple turnover ("chaussons aux pommes") and pithiviers.
Aspect 28. A raw (or ready to bake) filled laminated dough product (9, 330) obtained by the method of any one of aspects 1 to 22.
Aspect 29. A baked filled laminated dough product comprising a filling composition enclosed between a top laminated dough piece and a bottom laminated dough piece, wherein the bottom laminated dough piece is characterized by a dough piece density that is lower than the dough density of the top laminated dough piece. Preferably said product is obtained through the method according to any one of aspects 1 to 24.
Aspect 30. Use of two laminated dough pieces, characterized by distinct dough thickness for preparing a raw or ready-to-bake laminated dough product in a continuous production process.
Aspect 31. The use according to aspect 30, wherein a first laminated dough piece (211') forming the bottom laminated dough piece has a lower dough thickness when compared to the second laminated dough piece (212') forming the top laminated dough piece.
Aspect32. A production line for continuously producing raw or ready-to-bake laminated dough products (9, 330) according to the method of any one of aspects 1 to 24, comprising the following elements:
   - one or more conveyor belts configured to continuously transport a laminated dough piece or reversed laminated dough piece;
   - (i) one or more cutting means (31 to 36, 303) configured to laterally divide the laminated dough piece or reversed laminated dough piece asymmetrically into a first and second laminated dough piece or first and second reversed laminated dough piece and one or more calibrators or reverse calibrators (4) configured to reduce said first and second laminated dough pieces or reversed laminated dough pieces into dough pieces having a substantially equal surface area and shape; or
      (ii) one or more cutting means (36) configured to laterally divide the laminated dough piece or reversed laminated dough piece into a first (201) and second (202) laminated dough piece or first and second reversed laminated dough piece such that a second laminated dough piece or reversed laminated dough piece is obtained that has a surface area that is approximately a multiplicity of the surface area of the first laminated dough piece or reversed laminated dough piece and one or more folding stations to fold the second laminated dough piece into a second laminated dough piece or second reversed laminated dough piece having a substantially equal surface area and shape to the first laminated dough piece; or
      (iii) one or more cutting means (303) configured to asymmetrically longitudinally divide the laminated dough piece into a first laminated dough piece (311) and a second laminated dough piece (312), wherein the cutting means is positioned such that the second laminated dough piece (312) has a width (304) that is wider than the width (305) of the first laminated dough piece (311);
   - one or more conveyor belts configured to continuously transport the first and second laminated dough pieces or first and second reversed laminated dough pieces;
   - optionally and preferably in case of option (iii) above, one or more transverse calibrators rolling over the dough in a direction (307 and 307') substantially perpendicular to the direction (302) of the transport or movement of the laminated dough piece, wherein said transverse calibrator(s) are configured to reduce the first laminated dough piece in thickness (311 > 311') and to widen it to approximately the same width (304) of the second dough piece.
   - one or more pumps or disposing means configured to dispose one or more filling compositions (7) on the first laminated dough piece or first reversed laminated dough piece (201' 211' or 311');
   - one or more means configured to place the second laminated dough piece or second reversed laminated dough piece (202' 212' or 312) on the filling composition to obtain a filled laminated dough product or filled reversed laminated dough product. Typically said means is a conveyer belt that is guiding the second dough layer onto the first dough layer with said filling.
Aspect 33. The production line according to aspect 32, comprising a further cutting means configured to shape the filled laminated dough piece or reversed laminated dough piece into a final shape of the product comprising the top layer, the filling and bottom layer( 9, 330), or configured to trim the filled laminated dough product or reversed laminated dough piece in order to remove excess laminated dough pieces or excess reversed laminated dough pieces. Said excess laminated dough can be re-used (reworked) and fed into the dough kneading means to be combined with the original dough components (comprising flour, water, and salt).
Aspect 34. The production line according to aspect 32 or 33, further comprising one or more flouring units configured for providing flour on the laminated dough piece or reversed laminated dough piece.
Aspect 35. The production line according to any one of aspects 32 to 34, further comprising means for providing the second laminated dough piece or the second reversed laminated dough piece (202' or 212') with a glazing or egg-washing.
Aspect 36. The production line according to any one of aspects 32 to 35, further comprising means for providing the second laminated dough piece or the second reversed laminated dough piece (202' or 212') with a decorative marking, incision drawing, or scratching (rayage).
Aspect 37. The production line according to any one of aspects 32 to 36, wherein all components work within a temperature range of between 0°C and 20°C, preferably between 5°C and 15°C.
Aspect 38. The production line according to any one of aspects 32 to 37, which is a production line substantially requiring no direct human intervention on the line during the production. In some embodiments, an item may manually can be added in the filling such as a small charm, called the "fève", hidden inside in case of e.g. gallettes des rois. Alternatively, semi-automatic or semi-industrial lines are also envisaged when the make use of the concept of the invention.
Aspect 39. The production line according to any one of aspects 32 to 38, further comprising at the start of the production line:
   - a dough kneader, wherein the base dough composition is provided (essentially comprising water, flour and salt and where needed other ingredients including additives as indicated herein) to prepare the dough for extrusion. A rework stream may be connected to said kneader to recuperate excess laminated dough removed after cutting out the final shape of the product.
   - one or more dough extruder(s) located at the start of the production line comprising a feeding means for the base dough composition and an extrusion means configured to uniformly form a sheet of dough, said pump and extrusion means being configured so as to form a continuous sheet of laminated dough piece comprising a sheet of fat between two sheets of dough or configured so as to form a continuous sheet of reversed laminated dough piece comprising a sheet of dough comprised between two sheets of fat;
   - a fat composition pump located at the start of the production line comprising a feeding means for adding fat composition to the pump and an extrusion means configured to uniformly form a sheet of fat;
   - one or more conveyor belts configured to continuously transport the sheet of laminated dough piece or reversed laminated dough piece at a speed matching that of the dough composition extruder and fat composition pump, thereby forming a continuous sheet of dough-fat-dough, or, in case of inverse lamination, a sheet of fat-dough-fat;
   - optionally one or more flouring units located along the line configured for providing flour on the laminated dough piece or reversed laminated dough piece;
   - one or more calibrators, transverse calibrators, or multirollers for stretching and reducing the obtained laminated dough piece or reversed laminated dough piece;
   - one or more folding means configured to fold the laminated dough piece or reversed laminated dough piece several times, thereby forming a multiple layer laminated dough piece or reversed laminated dough piece;
   - optionally one or more brushes to remove excess flour from said laminated dough piece or reversed laminated dough piece at the end of the production line.

The above and further aspects and preferred embodiments of the invention are described in the following sections and in the appended claims. The subject matter of the appended claims is hereby specifically incorporated in this specification.

### BRIEF DESCRIPTION OF THE FIGURES

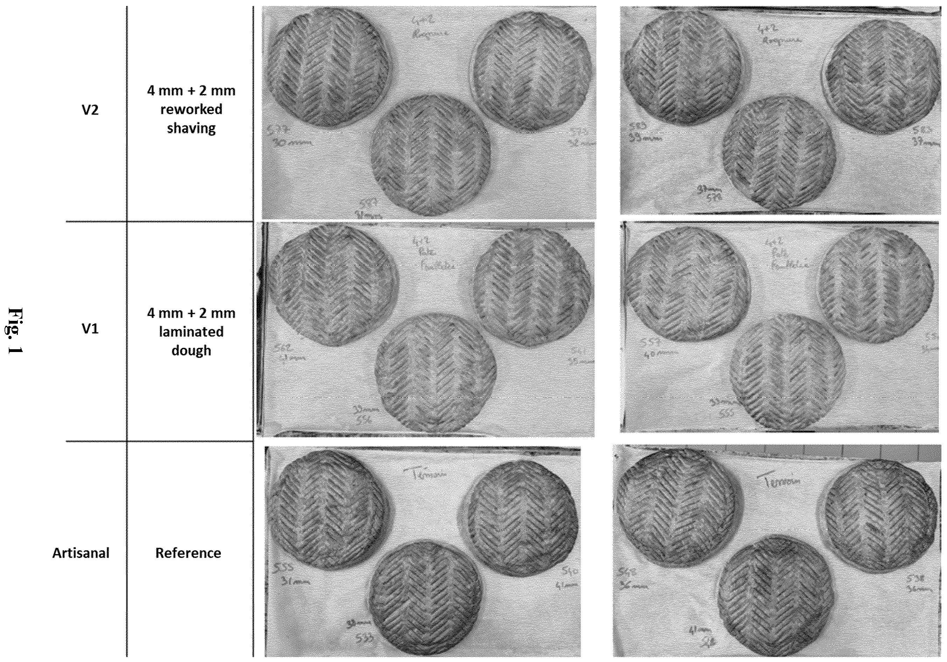

**Figure 1****.** Visual comparison of King cake produced by different production methods. V2: 4 mm top laminated dough layer, 2 mm reworked shaving as bottom layer; V1: 4 mm top laminated dough layer, 2 mm bottom laminated dough layer; Reference: 3mm top laminated dough layer + 3 mm bottom laminated dough layer. The decorative carving ("rayage") is most pronounced for V1 King cake. The decorative carving is similar for V2 and Reference.

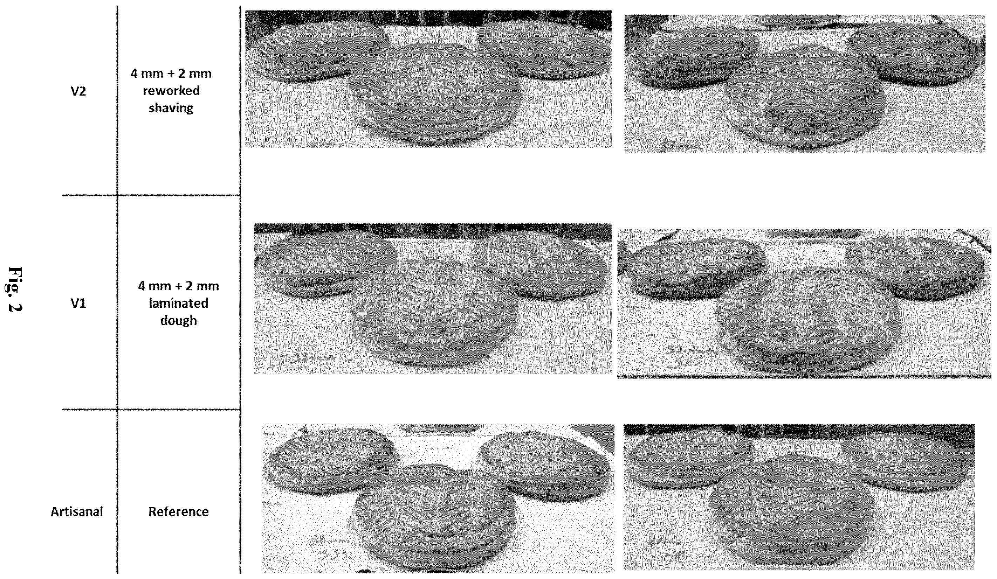

**Figure 2****.** Height and weight comparison of King cake produced by different production methods. V2: 4 mm top laminated dough layer, 2 mm reworked shaving as bottom layer; V1: 4 mm top laminated dough layer, 2 mm bottom laminated dough layer; Reference: 3 mm top laminated dough layer + 3 mm bottom laminated dough layer. No significant differences in height and weight could be observed. The aeration between the leafs ("feuillets") is most pronounced for V1 King cake.

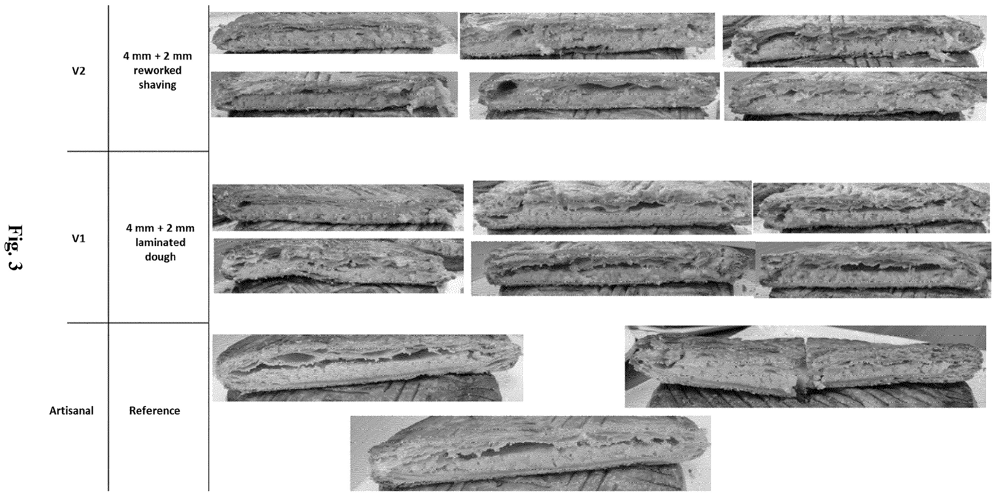

**Figure 3****.** Cross section analysis of King cake produced by different production methods. V2: 4 mm top laminated dough layer, 2 mm reworked shaving as bottom layer; V1: 4 mm top laminated dough layer, 2 mm bottom laminated dough layer; Reference: 3 mm top laminated dough layer + 3 mm bottom laminated dough layer. In the Reference, one can observe that the part of the bottom laminated dough layer in contact with the frangipane filling is less baked when compared to V2 and V1.

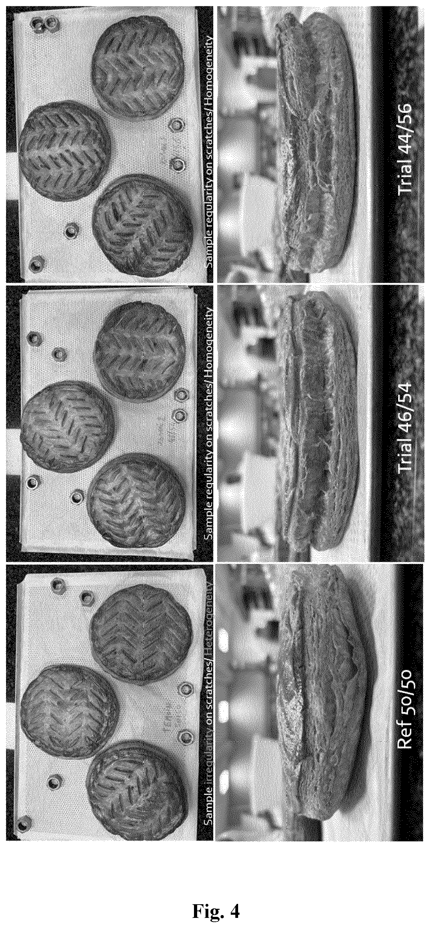

**Figure 4****.** Comparative experiment preparing three King cakes ("Galettes des rois"), one with a 50/50 division of the dough thickness between bottom and top layer (ref. 50/50) as reference product, one with a 46/54 division of thickness between bottom and top layer (trial 46/54), and one with a 44/56 division of thickness between bottom and top layer (trial 44/56), as explained in Example 4. In the top panels, the "rayage" or inscription drawing in the top layer of the cake is visualized and it is clear that in the two trial cakes, the inscription drawing is more pronounced. The side views of the cake (bottom pannels) show a more developed side, wherein the different layers of laminated dough are more pronounced in the trial products than in the reference product.

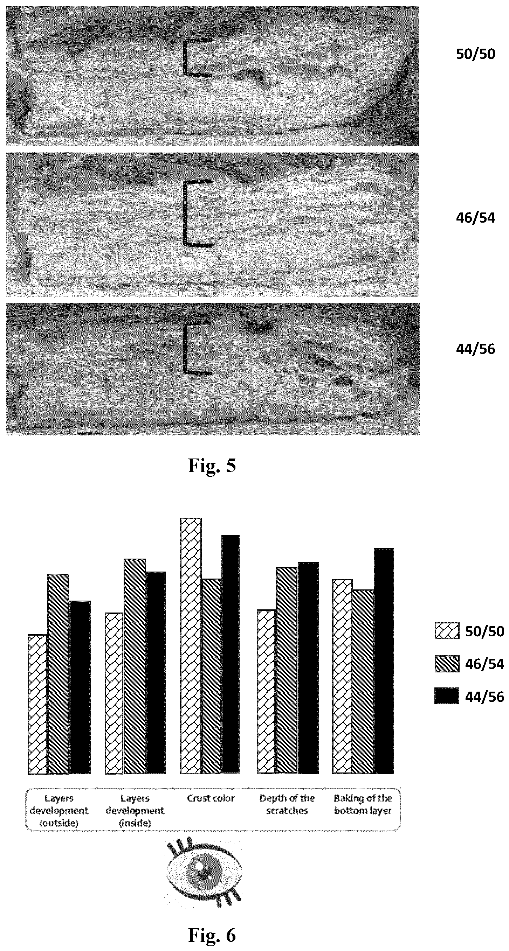

**Figure 5****.** Represents the cross sections of the King cakes of Example 4, i.e. 50/50 as ref. Product, and two trials 46/54 and 44/56. The bracket indicates the thickness of the top layer and one can clearly see that the two trial products have a more developed top layer, i.e. the different layers of laminated dough are more open than in the reference product.
**Figure 6****.** Sensory analysis of a trained test panel on the three King cakes of Example 4, i.e. 50/50 as ref. Product, and two trials 46/54 and 44/56. As can be seen from the graph, the two trial cakes score significantly better in the visual aspects of layer development (outside and inside), and in depth of the inscription drawings. The taste of the three cakes was not found to be significantly different by the panel (not shown).

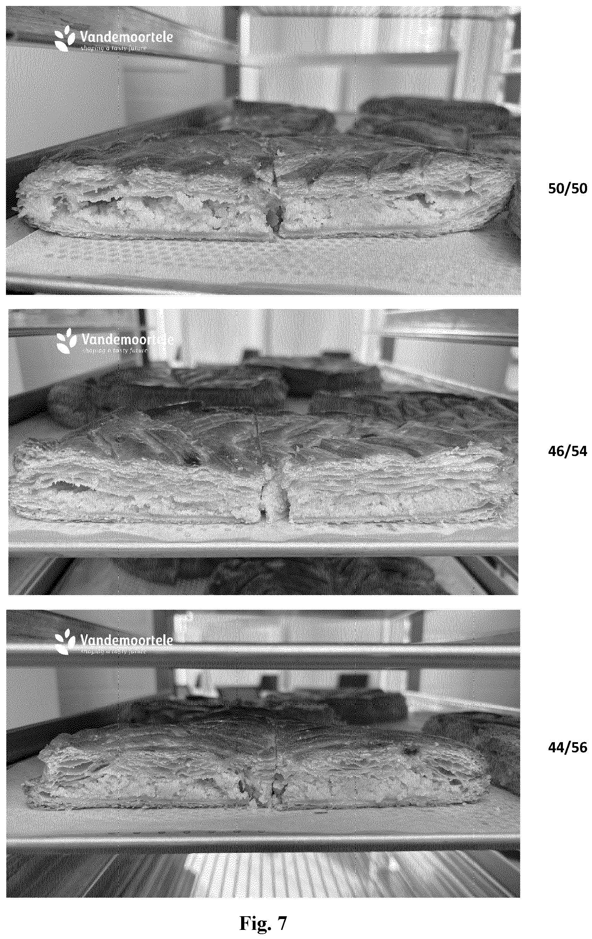

**Figure 7****.** Represents the cross sections of the King cakes of Example 4, i.e. 50/50 as ref. product, and two trials 46/54 and 44/56. Form the cross sections it is immediately apparent that the top layer of laminated dough is much more developed in the two trial products, versus the reference product.

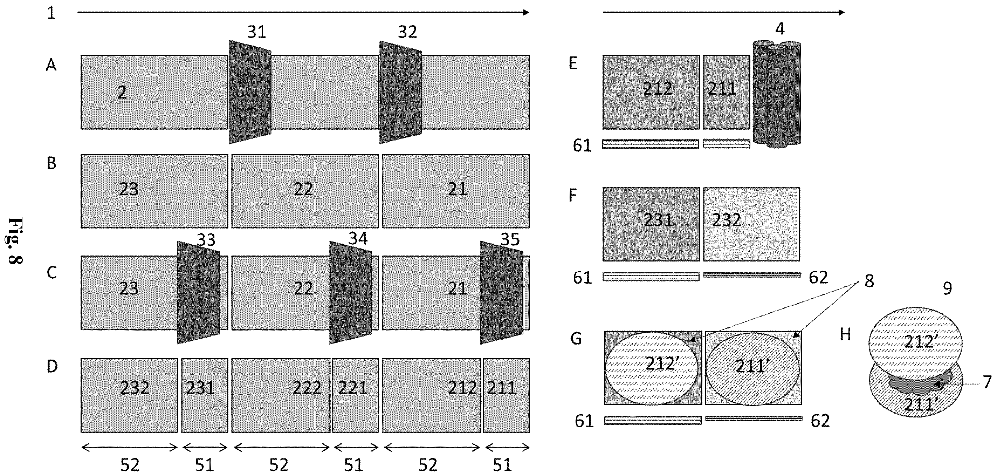

**Figure 8****.** Simplified schematic representation of a possible work flow of a (semi-) automatic or (semi-)industrial and/or continuous process according to the invention (1) for producing a raw, ready-to-bake laminated dough product (9) having an upper (212') and lower (211') laminated dough piece, and a filling (7) in-between said dough pieces, wherein a piece of elongated laminated dough (2) is transported in the direction of the arrow above the figure (e.g. through a conveyor belt) and is cut asymmetrically by one or more cutting means (31, 32) into a smaller dough piece 211 and a larger dough piece 212, wherein through the usage of reducing means (4), said smaller dough piece (211) is reduced in thickness to obtain the same surface area of the larger dough piece (212), but having a thickness (62) which is smaller than the thickness (61) of the larger dough piece (212), cutting out the final shape of the raw, ready-to-bake laminated dough product in both dough pieces (211' and 212'), and assembling the raw, ready-to-bake laminated dough product by stacking the bottom dough piece (211'), a filler composition (7) and top dough piece (212') and sealing the edges of the product by pressing upper and lower dough pieces together, thereby obtaining final product (9).

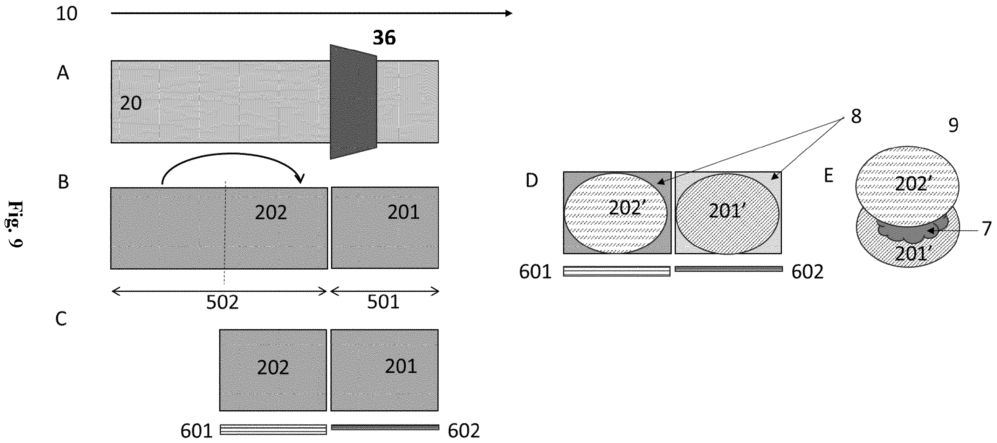

**Figure 9**. Simplified schematic representation of a possible work flow of a (semi-)automatic or (semi-)industrial and/or continuous process according to the invention (10) for producing a raw, ready-to-bake laminated dough product (9) having an upper (202') and lower (201') laminated dough piece, and a filling (7) in-between said dough pieces, wherein a piece of elongated laminated dough (20) is transported in the direction of the arrow above the figure (e.g. through a conveyor belt) and is cut by one or more cutting means (36) into a first laminated dough piece (201) and a second laminated dough piece (202) that is twice the length of first dough laminated piece (201), wherein the second laminated dough piece (202) is folded in half through folding or tilting means, thereby obtaining a bottom laminated dough piece (201) that has half the thickness (602) of the upper laminated dough piece (601), cutting out the final shape of the raw, ready-to-bake laminated dough product in both laminated dough pieces (201' and 202'), and assembling the raw, ready-to-bake laminated dough product by stacking the bottom laminated dough piece (201'), a filler composition (7) and top laminated dough piece (202') and sealing the edges of the product by pressing upper and lower laminated dough pieces together, thereby obtaining final product (9).

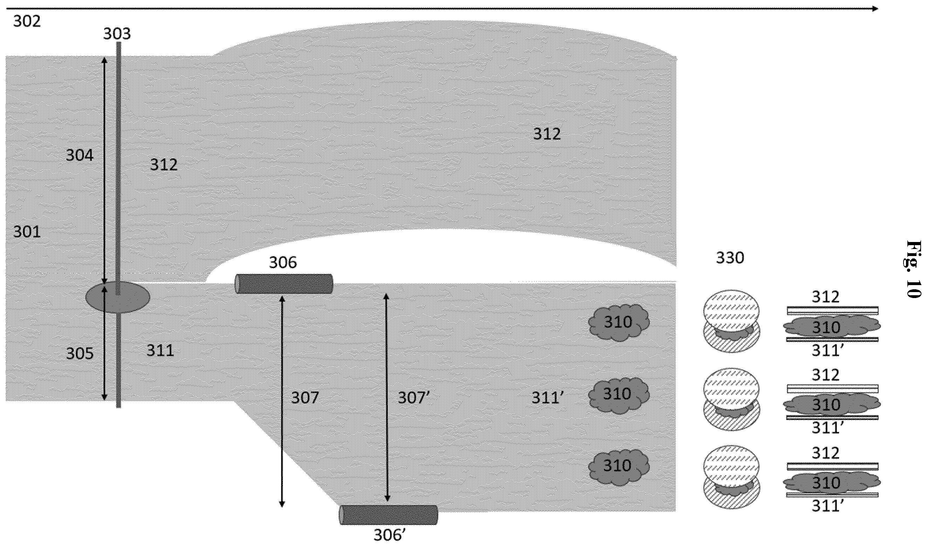

**Figure 10****.** Simplified schematic representation of a possible work flow of a (semi-)automatic or (semi-)industrial process according to the invention for producing a raw, ready-to-bake filled laminated dough product (330) having an upper (312) and lower (311') laminated dough piece, and a filling (310) in-between said two laminated dough pieces, wherein a piece of elongated laminated dough (301) is transported in the direction of the arrow (302) (e.g. through a conveyor belt) and is asymmetrically cut by one or more cutting means (303) into a first laminated dough piece (311) and a second laminated dough piece (312), wherein the second laminated dough piece (312) has a width (304) that is wider than the width (305) of the first laminated dough piece (311), whereby said two dough pieces are separated from each other, e.g. transported on different conveyer belts, and wherein the first laminated dough piece (311) is subjected to reduction by one or more transverse calibrators (306 and 306') rolling over the dough in a direction (307 and 307') substantially perpendicular to the direction (302) of the transport or movement of the laminated dough piece, thereby reducing said first dough piece (311 > 311') in thickness and widening it to approximately the same width (304) of the second dough piece. After said step, the filling (310) is deposited on the reduced first laminated dough piece (311') and covered with the non-reduced second laminated dough piece (312), followed by a circular cut through the second laminated dough piece (312), filling (310) and reduced second laminated dough piece (311'), thereby forming the final raw, ready-to-bake filled laminated dough product (330), having a bottom laminated dough layer (311') that is less thick than the upper laminated dough layer (312).

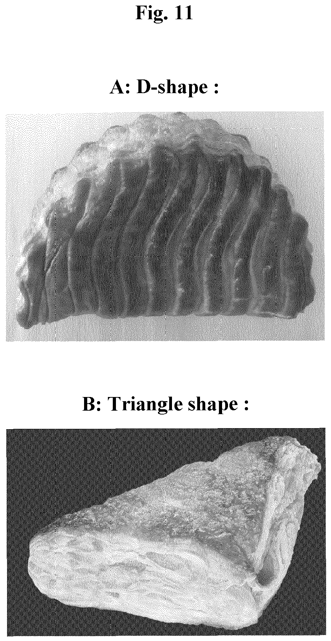

**Figure 11****.** Typical example of an apple turnover, A: in D-shape; B in triangular shape.

### DETAILED DESCRIPTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all numbers and fractions subsumed within the respective ranges, as well as the recited endpoints. This applies to numerical ranges irrespective of whether they are introduced by the expression "from... to..." or the expression "between... and..." or another expression.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more members or at least one member of a group of members, is clear per se, by means of further exemplification, the term encompasses inter alia a reference to any one of said members, or to any two or more of said members, such as, e.g. any ≥3, ≥4, ≥5, ≥6 or ≥7 etc. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e. also in the context of other aspects or embodiments of the invention, unless otherwise defined. For example, embodiments directed to products are also applicable to corresponding features of methods and uses.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, alternative combinations of claimed embodiments are encompassed, as would be understood by those in the art.

Unless indicated otherwise, all methods, steps, techniques and manipulations that are not specifically described in detail can be performed and have been performed in a manner known per se, as will be clear to the skilled person. Reference is for example again made to standard handbooks as well as to the general background art referred to herein and to the further references cited therein.

For the purposes of the invention, the terms "industrial" or "semi industrial" as used herein encompasses any continuous process not or barely requiring manual manipulation of the dough, i.e. a system that is substantially fully autonomously producing the inversed multilayer laminated dough products or sheets. This is in contrast to artisan processes, which require the interaction (manual manipulation/adaptations) of a (artisanal) baker in order to complete the production phase of the dough.

In view of the research findings of the inventors, the present invention is in a first aspect directed to a method for producing improved filled laminated dough products on a (semi-)industrial and/or (semi-continuous scale (1, 10). More particularly, the method is a (semi-)industrial and/or (semi-)continuous method (1, 10) for producing a raw or ready-to-bake, filled laminated dough product (9 or 330) that comprises the steps of:
- providing a first laminated dough piece or strip (201' 211' or 311') and a second laminating dough piece (202' 212' or 312) having an equal surface area, wherein the thickness (e.g. 62 or 602) (i.e. the height) of the first laminated dough piece is less than the thickness (e.g. 61 or 601) of the second laminated dough piece;
- providing a filling composition (7) on the first laminated dough piece (201' 211' or 311'), and covering the filling composition with the second laminated dough piece (202' 212' or 312) to obtain said raw or ready-to-bake, filled laminated dough product (9 or 330).

In some embodiments, said raw or ready-to-bake product can be frozen and/or packed for storage and/or transport, or can be baked.

A person of adequate skill in the art appreciates the term "laminated dough" or "puff pastry", and "laminated dough product" and these terms as used herein should be interpreted according to the widespread understanding in the art. In brief, laminated dough is a food preparation consisting essentially of numerous alternating thin layers of a dough composition and fat composition. Typically, a pre-dough composition is prepared by mixing and kneading all ingredients together in a single step. The pre-dough is then sheeted (i.e. reduced), and a fat layer is enclosed within a bottom and top layer of the pre-dough. Repeated sheeting and folding of these layers produces a laminar system with alternating sheets of pre-dough and fat (i.e. laminated dough). Upon subject laminated dough to baking, the water present in the butter vaporizes and expands, causing the dough to puff up and separate, while the lipids in the butter essentially bake the dough, ultimately resulting in a light, flaky product. Optionally, the laminating process may be a progressive laminating process, the dough passing through one or more calibrators, the space made between the conveying belt and the calibrator decreasing towards the following calibrator. Preferably, at the end of the laminating step, the thickness of the dough is between 15 and 1 mm, and preferably between 10 and 1 mm. In such embodiments, the method comprises successive steps of reducing the dough-fat layers by one or more calibrators, folding the latter several times and further reducing the multiple dough-fat-dough (or fat-dough-fat layers in case of inverse lamination) layers to obtain a fine multi-layer laminated dough strip or piece.

For the purposes of the invention, the term "reduction" as used herein encompasses the reduction of the thickness of the laminated dough sheet, typically done by means of a calibrator, or sheeter. Initially said dough-fat-dough (or fat-dough-fat) layer may be several centimetres thick. After folding, the laminated dough can easily have a thickness of 4 to 7 cm and in order to be useable in e.g. puff pastry products, its thickness needs to be reduced to about 5 mm, or even less (up to 1 mm) before shaping. This can be done using a series of (transverse) calibrators and/or multirollers with reduced openings, hence resulting in a series of reductions of the laminated dough in a gentle manner, i.e. without causing the gluten network and/or the fat layers to break or rupture.

Related to the foregoing, a "laminated dough product" or alternatively a "multi-layered laminated dough product" or "puff pastry" is a food dough product that comprises, typically at least as one or more outer portions of the product, laminated dough. Examples of laminated dough products in the art are numerous, and include without limitation croissant pastry, Danish pastry, flaky pastry, jachnun, kouignamann, kubaneh, malawach, paratha, m'semen, puff pastry, millefeuilles, King cake ("galette de rois"), Viennese pastry, croissants, chocolate rolls, turnovers, galettes, sweet pie ("tourte sucrée"), savory pie ("tourte salée"), turnovers having a filling selected from the group of: frangipane filling, caramel-frangipane filling, caramel filling, almond cream filling, apple pieces and/or apple compote filling, Custard cream filling, chocolate filling, and other fruit (compote) filling composition, more preferably an apple turnover ("chaussons aux pommes"), and pithivier. As can be appreciated, several of these laminated dough products comprise a filling composition. The present invention relates to methods for producing improved filled laminated dough products and the products obtained by these methods. Illustrative preferred filled laminated dough products in the context of the present disclosure are King cake ("galette de rois"), sweet pie ("tourte sucrée"), savory pie ("tourte salée"), Grillés (aux pomme), turnovers having a filling selected from the group of: frangipane filling, caramel-frangipane filling, caramel filling, almond cream filling, apple pieces and/or apple compote filling, Custard cream filling, chocolate filling, and other fruit (compote) filling composition, more preferably an apple turnover ("chaussons aux pommes"), and pithiviers.

In the final raw or ready-to-bake, filled laminated dough product (9 or 330), the first laminated dough piece (201' 2211' or 311') and the second laminating dough piece (202' 212' or 312) act respectively as the bottom laminated dough layer and the top laminated dough layer, and will upon baking form respectively the bottom crust and the top crust of the baked laminated dough product. It is to be appreciated that the position of the filling composition is generally between the bottom laminated dough piece and the top laminated dough piece. The extent of top surface of the bottom laminated dough piece covered by the filling composition is not particularly limiting for the invention, and may vary according to preferences or particulars of the filled laminated dough product.

In some embodiments, said raw or ready-to-bake product can be frozen and/or packed for storage and/or transport, or can be baked.

Preferably, in both the final raw, ready-to-bake and the final baked laminated dough product, the surface dimensions of the first (bottom) laminated dough piece and the second (top) laminated dough piece are generally equal. Hence, the area surface of both laminated dough pieces are generally equal and of generally the same shape. For example and without limitation, in view of decorative purposes and creating a pleasant appearance, the laminated dough product can be circular, rectangular, triangular, oval, star-shaped, cloud-shaped, nut-shaped, moon-shaped, etc.. Further, when reference is made throughout the present specification to thickness or height of the laminated dough pieces, it is to be understood that this relates to the length between the bottom part of the bottom laminated dough piece to the top of the bottom laminated dough piece, or to the length between the bottom part of the top laminated dough piece to the top part of the laminated dough piece.

Whilst generally having an equal surface area in the final raw, ready-to-bake or baked laminated dough product, the invention resides in that the bottom laminated dough piece and the top laminated dough piece have a different (i.e. distinct) thickness, wherein the bottom laminated dough piece (201' 211' or 311') is less thick (e.g. 62 or 602) (i.e. less in height) when compared to the thickness (e.g. 61 or 601) of the top laminated dough piece (202' 212' or 312).

The difference in thickness between the bottom laminated dough piece (201' 211' or 311') and the top laminated dough piece (202' 212' or 312) can be observed by any standard measuring means suitable for measuring with an precision in the millimetre range or better. Regardless, the absolute thickness (i.e. height) of the two laminated dough layers is of secondary importance, as the crux of the invention resides in a difference in thickness when comparing the bottom laminated dough piece to the top laminated dough piece. By means of illustration and not limitation, the thickness (62 or 602) (i.e. the height) of the first (bottom) laminated dough piece (201' 211' or 311') is at least about 5%, preferably at least about 10%, more preferably at least about 15%, more preferably at least about 20%, more preferably at least about 25%, more preferably at least about 30%, more preferably at least about 35%, more preferably at least about 40%, more preferably at least about 45%, more preferably at least about 50%, more preferably at least about 55%, more preferably at least about 60%, more preferably at least about 65%, more preferably at least about 70% less when compared to the thickness (61 or 601) of the second (top) laminated dough piece (202' or 212'). By means of illustration and not limitation, the thickness (62 or 602) of the first (bottom) laminated dough piece (201' or 211') is from about 5% to about 70%, preferably from about 10% to about 60%, preferably from about 10% to about 50%, preferably from about 10% to about 40%, preferably from about 1% to about 30% less than the thickness (61 or 601) of the second (top) laminated dough piece (202' or 212'). Preferably, the thickness (62 or 602) of the first (bottom) laminated dough piece (201' or 211') is about 25% the thickness (61 or 601) of the second (top) laminated dough piece (202' or 212'). Alternatively, the thickness (62 or 602) of the first (bottom) laminated dough piece (201' or 211') is about 33% the thickness (61 or 601) of the second (top) laminated dough piece (202' or 212'). Yet alternatively, the thickness (62 or 602) of the first (bottom) laminated dough piece (201' or 211') is about 50% the thickness (61 or 601) of the second (top) laminated dough piece (202' or 212'). Alternatively, the difference in thickness between the bottom layer and the top layer is preferably somewhere between 5% and 50%, preferably between 5% and 35%. Such as about 8%, about 10%, about 15%, 20%, 25%, 30%, preferably from 8% to 33%, from 8% to 25%, from 8% to 20%, from 8% to 15%, or from 10% to 33%, from 10% to 25%, from 10% to 20%, from 10% to 15%.

In preferred embodiments, the first and second laminated dough pieces described herein are obtained by the steps of:
(i) providing a laminated dough piece (2 or 20);
(iia) laterally dividing said laminated dough piece (2 or 20) into a first laminated dough piece (211) and a second laminated dough piece (212), wherein the surface area of said first laminated dough piece is smaller than the surface area of the second laminated dough piece, and reducing the first laminated dough piece and the second laminated dough pieces to an equal final surface area for said raw, ready-to-bake laminated dough product (9, 330) by means of one or more (transverse) calibrators or multirollers (4).

In further embodiments, step (iia) comprises laterally dividing the laminated dough piece in the first and second laminated dough piece such that the surface area of the first laminated dough piece (211) is at least about 5%, preferably at least about 10%, more preferably at least about 15%, more preferably at least about 20%, more preferably at least about 25%, more preferably at least about 30%, more preferably at least about 35%, more preferably at least about 40%, more preferably at least about 45%, more preferably at least about 50%, more preferably at least about 55%, more preferably at least about 60%, more preferably at least about 65%, more preferably at least about 70% less than the surface area of the second (top) laminated dough piece (212) prior to reduction.

By means of illustration and not limitation, the lateral division of step (iia) results in a first (bottom) laminated dough piece that has a surface area that is from about 5% to about 70%, preferably from about 10% to about 60%, preferably from about 10% to about 50%, preferably from about 10% to about 40%, preferably from about 1% to about 30% less than the surface area of the second (top) laminated dough piece prior to reduction. Preferably, the lateral division of step (iia) results in a surface area of the first (bottom) laminated dough piece that is about 25% the thickness of the second (top) laminated dough piece. Alternatively, the surface area of the first (bottom) laminated dough piece is about 33% of the surface area of the second (top) laminated dough piece. Yet alternatively, the surface area of the first (bottom) laminated dough piece is about 50% of the surface area of the second (top) laminated dough piece.

In alternative preferred embodiments, the first and second laminated dough pieces described herein are obtained by the steps of:
(i) providing a laminated dough piece (2 or 20);
(iib) dividing the laminated dough piece into a first laminated dough piece (201) and a second laminated dough piece (202), and folding the second laminated dough piece at least once to obtain a second laminated dough piece that has an equal surface area and shape (502) as the surface area and shape (501) of the first laminated dough piece.

In certain embodiments, step (iib) comprises folding the second laminated dough piece (202) more than once, for example at least 2 times, at least 3 times, or even at least 4 times. The precise method of folding the second laminated dough piece (202) is not limiting for the invention, provided a final second laminated dough piece (202') is obtained that has a substantially the same shape and size as the first laminated dough piece (201'). Hence, the second laminated dough piece (202) can be half-folded, tri-folded, Z-folded, 4-panel accordian folded, 3-panel gate folded, double gate folded, roll folded, double parallel folded, vertical half folded, French folded (i.e. "quartier" folded), map folded, or folded using any combination of the foregoing folds.

Alternatively to the embodiment described above, the step of folding the second laminated dough piece (202) is replaced with, or combined with stacking at least two laminated dough pieces of substantially the same surface area and shape on top of each other (i.e. placing at least two laminated dough pieces of substantially the same surface area and shape on top of each other). Optionally, at least three, at least four, at least five, or more than five laminated dough pieces are stacked on top of each other. Optionally, the second laminated dough piece (202) is provided in duplo, or more than in duplo, and each second laminated dough piece is at least folded once prior to stacking the distinct second laminated dough pieces on top of each other. Optionally, distinct second laminated dough pieces (202) are partially (e.g. about 50% overlap) stacked on top of each other prior to folding the overlapping portion, such that folds of the distinct second laminated dough pieces are intertwined.

In yet alternative preferred embodiments, the first (bottom) dough piece and the second (top) laminated dough piece are obtained by the steps of:
(i) providing a laminated dough piece;
(iic) asymmetrically cutting said dough piece longitudinally (i.e. parallel to the transport direction (302)) by one or more cutting means (303) into a first laminated dough piece (311) and a second laminated dough piece (312), wherein the second laminated dough piece (312) has a width (304) that is wider than the width (305) of the first laminated dough piece (311);
   separating said two dough pieces from each other (i.e. transporting them separately);
   reducing the first laminated dough piece (311) by one or more transverse calibrators (306 and 306') rolling over the dough in a direction (307 and 307') substantially perpendicular to the direction of transport (302) of the dough piece, thereby reducing said first laminated dough piece (311) in thickness and widening it to approximately the same width (304) of the second laminated dough piece, resulting in a reduced first laminated dough piece (311') having a thickness that is reduced by at least about 5%, preferably at least about 10%, more preferably at least about 20%, more preferably at least about 30%, more preferably at least about 40%, more preferably at least about 50% when compared to the thickness of the second laminated dough piece (312).

In any one of options (iia), (iib), or (iic), upon the excising the final shape out of the dough layers, the waste laminated dough ("rognure") can be reworked into a new piece of dough which is used as bottom dough piece for the filled laminated dough product, or which is mixed with the original dough mixture at the start of the line. Up to 5%, 10%, 15%, 20%, 25%, 30%, 35%, 40%, 45% or 50% rework material can be mixed measured on the normal dough mixture comprising water, flour and salt.

Generally, the laminated dough piece provided in step (i) has a substantially elongated shape such as a rectangular shape, but may have other suitable shapes such as but not limited to a square shape. In the industrial and continuous process, the laminated dough piece (2 or 20) is preferably a flattened strip ("sheet") of laminated dough. Said dough strip can be continuously fed into or transported onto the production line.

The final shape and size of the final raw, ready-to-bake laminated dough product (9, 330) and/or the final baked laminated dough product is not particularly limiting for the invention. Hence, suitable shapes includes those substantially circular, rectangular, square, triangular, or elliptical, star-shaped, cloud-shaped, moon-shaped, nut-shaped, oval, or the like. In embodiments wherein the final shape of the filled laminated dough product has a shape characterised by corners when viewed from a top-down or bottom-up angle, one or more incisions can be made in, or essentially in, or near these corners to improve the mouthfeel of the baked product.

Any filled laminated dough product (9, 330) can be produced, and is envisaged by the method disclosed herein. However, preferred filled laminated dough products are selected from the group consisting of: King cake ("galette de rois", sweet pie ("tourte sucrée"), savory pie ("tourte salée"), Grillés (aux pomme), turnovers having a filling selected from the group of: frangipane filling, caramel-frangipane filling, caramel filling, almond cream filling, apple pieces and/or apple compote filling, Custard cream filling, chocolate filling, and other fruit (compote) filling composition, more preferably an apple turnover ("chaussons aux pommes"), and pithiviers. Most preferably, the filled laminated dough product is King cake.

The method of the invention may comprise one or more further, optional, steps, such as marking and/or glazing the top laminated dough piece (202' 212' or 312), and/or freezing the raw, ready-to-bake laminated dough product (9, 330). Both optional steps of marking and glazing the top laminated dough piece (202' 212' or 312) may occur prior or after the optional step of freezing the laminated dough product.

Hence, in certain embodiments, the method comprises a further step of providing a marking or drawing ("rayage") on or into (through incisions) the second laminated dough piece (202' 212' or 312). A skilled person is familiar with this concept, which is a step introduced to provide the (raw, ready-to-bake orbaked) filled laminated dough product with decorative patterns on its surface. The marking or scratching may be introduced by any suitable means, such as but not limited to a (decorative) knife, a cutting device, cutting shape, or dough rolling pins, which may be installed on the production line or may be applied separately in case of e.g. a semi-automatic production process.

In certain embodiments, the method comprises a further step of provided the second laminated dough piece (202' 212' or 312) with a glazing or egg-washing ("dorer"). In such embodiments, the surface of the second laminated dough piece is spreaded with a thin layer of egg yolk ("dorure") (preferably diluted in water or milk) prior to baking the filled laminated dough product. Upon baking, this glazing will brown the surface of the second (i.e. top) laminated dough piece in a visually pleasing manner). The glazing can be provided over substantially the complete surface of the top laminate dough piece or a portion thereof. In the latter embodiments, the glazing can be provided in a decorative motif on the second laminated dough piece.

During the optional step of freezing and/or deep-freezing the raw, ready-to-bake filled laminated product (9 or 330), the temperature is preferably between -12 and -40°C, for a period ranging from 30 minutes to 1 hour. Said food product can be frozen in its cut or shaped form or as a sheet. Said step is carried out, for example, in a freezing or deep-freezing tower. This step makes it possible to store the food for periods of between several hours and several months, and also to maintain the shape of the food product.

Advantageously, the freezing and/or deep-freezing step in continuous production may comprise:
- either a freezing step carried out at a temperature of between -12°C and -30°C, preferably for a period of between 20 minutes and 24 hours, or
- a deep-freezing (shock-freezing) step carried out at a temperature of between -18°C and - 40°C, preferably for a period of between 2 minutes and 1 hour, In deep-freezing, the core of the product achieves a temperature of -18°C, or
- a freezing step carried out at a temperature of between -12°C and -30°C, preferably for a period of between 20 minutes and 24 hours, followed by a deep-freezing step carried out at a temperature of between -18°C and -40°C, preferably for a period of between 2, 3, 4, or 5 minutes and 1 hour, or conversely a deep-freezing step carried out at a temperature of between -18°C and -40°C, preferably for a period of between 2, 3, 4, or 5 minutes and 1 hour, followed by a freezing step carried out at a temperature of between -12°C and -30°C, preferably for a period of between 20 minutes and 24 hours.

In a final step before consumption, preferably in an ulterior phase, the raw, ready-to-bake filled laminated dough food product (9 or 330) can be baked in an oven. The oven used may be a conventional oven or a pulsed air oven, with or without steam, floor oven, ventilated oven or rotative oven. According to one embodiment, the baking step is carried out at a temperature ranging from 140 to 200°C, preferably for a period ranging from 10 to 30 minutes. After the baking, the baked foods thus prepared are ready to be consumed.

Both the first and the second laminated dough pieces comprised in the final laminated dough food product comprise multiple dough composition-fat composition-dough composition layers. In embodiments of the method such as those comprising step (iia or iic), the first (211') and second (212') laminated dough pieces comprise a substantially equal amount of fat composition layers. Optionally, the first (201' 211' or 311') and/or second laminated dough piece (202' 212' or 312) comprises at least 64 fat composition layers, preferably at least 96 fat composition layers, most preferably 216 fat composition layers. Optionally, the first (201' 211' or 311') and/or the second (202' 212' or 312) laminated dough piece comprises from 64 to 216 fat composition layers, preferably from 96 to 216 fat composition layers. Optionally, the first (201' 211' or 311') and/or second (202' 212' or 312) laminated dough piece comprises at 216 fat composition layers or less.

In embodiments of the method such as those comprising step (iib), the first (bottom) (201') and second (top) (202') laminated dough pieces comprise a distinct amount of fat composition layers. Optionally, the second laminated dough piece (202') comprises about double the fat composition layers of the first laminated dough piece (201'). Optionally, the second laminated dough piece (202') comprises about three times the fat composition layers of the first laminated dough piece (201').

In preferred embodiments, the step of laterally dividing the laminated dough piece (2 or 20) into a first and second laminated dough piece occurs by means of an asymmetrical cut. A skilled person appreciates that an asymmetrical cut corresponds to a cut in the laminated dough piece which results in a division of said laminated dough piece which is not equal in surface area for the first (211) and second (212) laminated dough piece. Similarly, said cut can be made longitudinally, i.e. parallel to the direction of transport of the dough piece or strip, resulting in two different strips of dough. The particulars of the asymmetrical cut are not limiting for the invention and may be envisaged by a skilled person. By means of illustration and not limitation, the asymmetrical cut may divide the surface area of the laminated dough piece into a 52.5 to 47.5 ratio, or a 55 to 45 ratio, or a 57.5 to 42.5 ratio, or a 60 to 40 ratio, or a 65 to 35 ratio, or a 70 to 30 ratio, or a 75 to 25 ratio, or a 80 to 20 ratio, or a 85 to 15 ratio, or a 90 to 10 ratio of the second (top) laminated dough piece (212 or 312) to the first (bottom) laminated dough piece (211 or 311).

A skilled person appreciates that "a laminated dough piece" as referred to herein is the laminated dough piece (2, 20) that in the industrial and continuous process according to the invention is said piece of dough that is used to prepare the first and the second laminated dough pieces that will respectively form the bottom and top laminated dough piece, and ultimately the bottom and top crust of the filled laminated dough product. This "initial" laminated dough piece (2, 20, or 301) can be produced by any suitable method known in the art. By means of illustration and not limitation, the laminated dough piece of (i) may be produced by following the steps of:
(11) providing a base dough composition ("détrempe");
(i2) extruding said base dough composition through an extruder to obtain a strip of dough;
(i3) reducing said strip of dough by means of one or more calibrators or multirollers;
(i4) dividing the reduced strip of dough into two distinct strips of dough;
(i5) extruding a fat composition and depositing said fat composition between the two separate strips of dough to obtain a dough-fat-dough composition;
(i6) reducing said dough-fat-dough composition by means of one or more calibrators or multirollers, and folding said composition into a laminated dough piece.

The term "extruding" used herein which refers the use of an "extruder" encompasses any extrusion means that enables the production of a thin layer or sheet of either dough, fat or butter. An extruder typically comprises a thin opening or "mouth" through which the dough, fat, or butter is forced out of the pump onto the conveyor belt or onto another layer. For example, a combination of three extruders can be used to create a sandwich of fat-dough-fat sheets according to the invention. In some embodiments, said extruder comprises a feeding means for the dough premix; one or more vertical and/or horizontal screws and an extrusion means. The extruder may be a pump, or even a vacuum pump. Hence, in certain embodiments the extruder used for extruding the fat may be a fat pump such as a butter pump, or a vacuum fat pump such as a butter vacuum pump. The terms "fat pump" or "butter pump" as used herein encompasses any type of pump capable of sufficiently malleating the fat or butter so as to make it plastic enough for thin sheeting by means of an extruder.

The term "calibrator" as used herein encompasses any reduction means or sheeting means that uses a single roller to reduce the thickness of the dough. This is not to be confused with a multi-roller reduction means. A calibrator normally rotates over an axis that is substantially perpendicular to the transport direction of the dough. A transverse calibrator rotates on an axis that is substantially parallel to the transport direction of the dough, and may move over said dough in a lateral manner, to e.g. both reduce and widen the dough strip.

For the purposes of the invention, the term "folding" may refer to manually folding but in the present context of an industrial and continuous method generally indicate the presence of a folding means to (semi-)automatically carry out one or more folding steps such as a folding station or tiling station. Hence, "folding means" as used herein in relation to the method subject of the present disclosure refers to a device that can fold and stack the inversed laminated dough sheet one or multiple times. There are different types of folding means, sometimes also referred to as "laminators", that result in asymmetrical lamination or symmetrical lamination. Lamination can be done in different ways. For example, through lapping, which is done by running the dough sheet vertically between a guiding system that moves back and forth. In cutting and stacking, a guillotine cuts the dough sheet into regular rectangular sheets which are then stacked on top of each other. Alternatively, laminating can be done through horizontal laminating, whereby the conveyor belt with the dough sheet moves back and forth above the next conveying belt, thereby stacking the layers.

Optionally, the laminated dough piece (2, 20) is a reversed laminated dough piece ("feuilletage inversé"). In such embodiments, the first (201' 211' or 311') and second (202' 212' or 312) laminated dough pieces are reversed first and second laminated dough pieces. Furthermore, in such embodiments, the raw, ready-to-bake or baked filled laminated dough product is a raw, ready-to-bake or baked filled reversed laminated dough product.

The main constituents of reversed laminated dough correspond to those in laminated dough, i.e. a multi-layered pastry dough system with alternating layers of fat and pre-dough. However, whereas in laminated dough a fat layer is enclosed by two dough layers, in reversed laminated dough a dough layer is enclosed by two fat layers. The reversed pastry method, which is a commonly used name to refer to the method to produce reversed laminated dough, starts with providing a pre-dough layer between two fat layers (i.e. the fat is at the external side). After this first step, a multitude of sheeting and folding steps are used in the reversed pastry process to create a multi-layered pastry dough. Another difference with the standard pastry process is the introduction of flour in the fat layer for the reversed pastry process. The fat mixed with flour is called kneaded butter ("beurre manié") and is prepared in advance in a planetary mixer using a "leaf' device.

The aim of the flour contained in kneaded butter is to limit stickiness in the later stages of the process. To get a correct layering the artisan baker pays attention at each step of the process on the lamination table particularly at the first reduction step in order to keep a correct alternation of pre-dough layers and fat layers. The artisan baker can adjust the reduction steps and possibly add manually dusting flour when the layer of fat is starting to stick. Experienced bakers can also manually correct the cracks at the side by moving the piece of kneaded butter by hands. Resting times between the reduction steps are also commonly applied to cool down and relax the layers to avoid defects in the layers. This process of reversed pastry is well known by premium professional artisan bakers to give end products that are more regular, crispier, have a shorter bite and/or a more melt in the mouth texture (are more 'fondant').

Detailed methods for producing reversed laminated dough and reversed laminated dough products in a continuous process and on industrial scale have been described earlier in detail in WO2021/250246A1, the content of which are incorporated herein by reference. In brief, as starting fat composition the method relies on the use of a fat composition comprising: a fat component and from 0,1 to 40 wt.% of a functional ingredient increasing the water and fat binding capacity and viscosity of the laminating fat, wherein said functional ingredient has a water holding capacity of equal to or greater than 0,8 as measured by standard method AACC N° 88-04. The functional ingredient is typically selected from pre-gelatinized starch or wheat flour such as heat treated pre gelatinized wheat flour, hydrocolloids and fibres such as dietary fibres selected from: non-starch polysaccharides and other plant components such as cellulose, resistant starch, resistant dextrins, inulin, lignins, chitins, pectins, beta-glucans, and oligosaccharides. Furthermore, said method relies on preparing a dough premix (pre-dough) composition comprising between 40 and 70 wt.% water on flour, and kneading said premix into a dough. Typically, the flour used for the dough premix has a ratio of tenacity and extensibility (P/L) value of below 1,2 as measured by an alveograph, wherein P is the maximum pressure, roughly equalling the resistance of the dough against extension (tenacity) and wherein L is the average length of the curve a rupture of the bubble roughly equalling the dough extensibility. Particularly for reversed laminated dough, it is desirable that the flour used for the dough premix preferably has any one or more of the following characteristics:
a) an adequate water absorption: One of the major specificities of reversed pastry being that the steam, needed for the development of pastry during cooking, is generated both by the free water contained in the fat, and by the free water of the dough. At the same time, some water is often released from the dough through the lamination process, which is a real issue for the continuous industrial production on an industrial scale of inversed laminated dough. Advantageously, said flour has a water absorption of equal to or greater than 40, preferably equal to or greater than 45, 50, or 55, more preferably between 40 and 70, such as between 50 and 65, or between 45 and 65. Water absorption can be measured with a standard farinograph (e.g. of Brabender), adapted from AACC 54-21.02 (https://methods.aaccnet.org/summaries/54-21-02.aspx), water at 30°C e.g. as specified in the Brabender farinograph manual;
b) the ratio between tenacity and extensibility of the flour can be expressed by the P/L ratio as measured by an alveograph (e.g. Chopin). Preferably said dough or flour has a P/L of below 1,2. In view of the use in the current invention it is important to have a flour with both a higher water absorption value and a P/L value of below 1.2, preferably below 1.1, more preferably below 1. Alternatively, specific rheological properties of consistency and elasticity assessed by the BIPEA panification test (calibrated, standard NF V 03-716 of Dec. 2015). Typically, a consistency in excess of equal to or higher than 7 and/or elasticity in excess equal to or higher than 4, preferably 7;
   and/or
c) the flour used in the dough pre-mix can in some preferred embodiments have a high protein content such as a protein content of 10% or more, such as 11% or more, more preferably of 12% or more, such as from 10 to 20% protein, preferably of 12 to 17% of protein.

In an industrial and continuous production process, typically a flouring device is used. The term "flouring device" or flour "duster" as used herein encompasses any means that can dust or bring a thin layer of flour on and/or under the laminating dough sheet in order to reduce its stickiness during continuous industrial production.

Hence, in any of the embodiments described herein, the base dough (i.e. pre-dough (mix)) comprises flour, water, and salt. Evidently, the base dough may comprise further ingredients. Optionally, the base dough comprises one or more further ingredients selected from the group consisting of: sugar, gluten, improver, salt, yeast, sourdough, cacao, chocolate chips, eggs and dairy ingredients such as milk, milk powder, buttermilk, or whey, or any combination of any one of the foregoing. The term "improver" encompasses active compounds which assist the development of the dough and shelf-life of the product. Non-limiting examples are: enzymes, emulsifiers or ascorbic acid. Preferably, the base dough consists essentially of flour, water, and salt. More preferably, the base dough consists of flour, water, and salt.

Upon preparing the laminated dough piece, the fat composition(s) and dough composition(s) may be conjoined, i.e. attached to each other at positions that do normally not touch one another by mere folding or reduction steps.

The laminated piece of dough may be produced by folding an initial dough-fat-dough or fat-dough-fat composition at least two times, preferably at least three times, preferably at least four times, or even more than four times. The folding may be performed by folding stations or tiling stations as mentioned above. A skilled person understands that different folding schemes have been described in the art. Illustrative yet non-limiting methods for laminating the dough therefore include the 2 X 4 method, the 2 X 4 - 3/4 method, and the 3 X 3 method.

The filling used in the method and present in the raw, ready-to-bake (and/or baked) filled laminated food product is not particularly limiting for the invention and can generally be adjusted according to producer and/or consumer preferences. For certain filled laminated dough products such as King cake, sweet or savoury compositions are typical filling compositions. Preferably, the filling composition is a frangipane composition, caramel-frangipane composition, an almond cream composition, an apple compote composition and the like. Further envisaged examples of sweet or savoury fillings include without limitation fillings comprising meats, cheeses, fruits, eggs, tofu, and combinations thereof. Illustrative examples of meat used in meat fillings include poultry, beef, pork, fish, and combinations thereof. Illustrative examples of vegetables used in vegetable fillings include onions, peppers, carrots, zucchini, mushrooms, spinach, tomatoes, cucumbers, corn, peas, broccoli, and any combinations thereof. Illustrative cheeses used in cheese filings include American cheese, Swiss cheese, cheddar cheese, blue cheese, Colby cheese, brie, and any combinations thereof. Alternatively or in addition to a solid or semi-solid filling composition, the filled laminated dough product may comprise a liquid such as a sauce or a gravy. Evidently, in such embodiments the liquid should be characterized by a sufficient viscosity such that the liquid will remain within the puff pastry dough both during and after cooking.

A further aspect of the invention is directed to a raw, ready-to-bake laminated dough having a filling (i.e. a filled laminated dough product) produced by the method described herein. Hence, an aspect of the invention is directed to a raw, ready-to-bake laminated dough product having a filling, comprising a filling composition enclosed between a top laminated dough piece and a bottom laminated dough piece, wherein the bottom laminated dough piece is thinner when compared to the top laminated dough piece.

Yet a further aspect of the invention is directed to a baked laminated dough having a filling (i.e. a filled laminated dough product) produced by the method described herein. The inventors have found that baked filled laminated dough products produced by the method according to the invention have an improved mouthfeel, crispness, and provide a more "fondant" consumer experience when compared to filled laminated dough products that are not produced according to the method of the invention (i.e. when compared to filled laminated dough products wherein the raw, ready-to-bake product comprises a top laminated dough piece and bottom laminated dough piece of substantially equal thickness. Also, the top layer is more developed than in traditional puff pastry product. Hence, an aspect of the invention is directed to a baked laminated dough product having a filling, comprising a filling composition enclosed between a top laminated dough piece and a bottom laminated dough piece, wherein the bottom laminated dough piece is thinner when compared to the top laminated dough piece.

It is evident that any of the embodiments of the laminated dough piece described as embodiment of the method according to the invention are also envisaged for the laminated dough piece in the raw, ready-to-bake filled laminated dough product and/or baked filled laminated dough product.

Optionally, the thickness (62 or 602) (i.e. the height) of the first (bottom) laminated dough piece (201' or 211') in the raw, ready-to-bake filled laminated product (9, 330) is at least about 5%, preferably at least about 10%, more preferably at least about 15%, more preferably at least about 20%, more preferably at least about 25%, more preferably at least about 30%, more preferably at least about 35%, more preferably at least about 40%, more preferably at least about 45%, more preferably at least about 50%, more preferably at least about 55%, more preferably at least about 60%, more preferably at least about 65%, more preferably at least about 70% less when compared to the thickness (61 or 601) of the second (top) laminated dough piece (202' or 212') in the raw, ready-to-bake filled dough product (9, 330). By means of illustration and not limitation, the thickness (62 or 602) of the first (bottom) laminated dough piece (201' or 211') is from about 5% to about 70%, preferably from about 10% to about 60%, preferably from about 10% to about 50%, preferably from about 10% to about 40%, preferably from about 1% to about 30% less than the thickness (61 or 601) of the second (top) laminated dough piece (202' or 212'). Preferably, the thickness (62 or 602) of the first (bottom) laminated dough piece (201' or 211') is about 25% the thickness (61 or 601) of the second (top) laminated dough piece (202' or 212'). Alternatively, the thickness (62 or 602) of the first (bottom) laminated dough piece (201' or 211') is about 33% the thickness (61 or 601) of the second (top) laminated dough piece (202' or 212'). Yet alternatively, the thickness (62 or 602) of the first (bottom) laminated dough piece (201' or 211') is about 50% the thickness (61 or 601) of the second (top) laminated dough piece (202' or 212').

Optionally, the thickness (62 or 602) (i.e. the height) of the bottom laminated dough piece (201' or 211') that acts as the lower crust in the baked filled laminated product produced using the method described herein, is at least about 5%, preferably at least about 10%, more preferably at least about 15%, more preferably at least about 20%, more preferably at least about 25%, more preferably at least about 30%, more preferably at least about 35%, more preferably at least about 40%, more preferably at least about 45%, more preferably at least about 50%, more preferably at least about 55%, more preferably at least about 60%, more preferably at least about 65%, more preferably at least about 70% less when compared to the thickness of the bottom laminated dough piece that acts as the lower crust in a baked filled laminated product produced using a method that relies on a substantial equal bottom and top laminated dough piece (i.e. a baked filled laminated dough product produced using a method distinct than the method described herein).

By means of illustration and not limitation, the mouthfeel, crispness, development of the top layer and/or fondant of the filled laminated food product is at least about 5%, preferably at least about 10%, more preferably at least about 15%, more preferably at least about 20%, more preferably at least about 25%, more preferably at least about 30%, more preferably at least about 35%, more preferably at least about 40%, more preferably at least about 45%, more preferably at least about 50%, more preferably at least about 55%, more preferably at least about 60%, more preferably at least about 65%, more preferably at least about 70% better evaluated by an expert panel when compared to the mouthfeel, crispness, and/or fondant of a baked filled laminated dough product produced using a method distinct than the method described herein.

The baked laminated dough product may, depending on how the difference in thickness in the raw, ready-to-bake filled laminated dough product is obtained, have an equal amount of fat and dough layers in the top and bottom laminated dough pieces (e.g. when a laminated dough piece is divided asymmetrical to obtain a first and second laminated dough piece), or have more fat and/or dough layers in the top laminated dough piece when compared to the bottom laminated dough piece (e.g. when the top laminated dough piece is folded at least one additional time after division of a laminated dough piece into a first laminated dough piece and a second laminated dough piece).

In embodiments wherein the baked filled laminated dough product comprises an equal amount of fat and dough layers in the top and bottom laminated dough pieces, due to the particulars of the production process the bottom laminated dough piece (211') will be characterised by an lower dough density when compared to the top laminated dough piece (212'), since the bottom laminated dough piece (211') has been reduced to a greater extent to arrive at a substantially equal surface area in the filled laminated dough product (9, 330).

Another aspect of the invention is directed to the use of two laminated dough pieces, characterized by distinct dough densities for preparing a raw, ready-to-bake laminated dough product (9, 330) in a continuous production process. It is understood that the distinct dough densities arise due to the extent to which each laminated dough piece is reduced to arrive at a final equal surface area that is needed to form the shape of the filled laminated dough product.

Another aspect of the invention is directed to the use of two laminated dough pieces, characterized by a distinct amount of folds (i.e. the amount of dough-fat-dough or fat-dough-fat layers) for preparing a raw, ready-to-bake laminated dough produce in a continuous production process.

A further aspect of the invention is directed to a production line for (semi-)continuously or (semi-)autonomously producing raw, ready-to-bake laminated dough products (9, 330) as described herein according to the method described herein. More particularly, the production line comprises the following elements:
- one or more conveyor belts configured to continuously transport a laminated dough piece or reversed laminated dough piece;
- one or more cutting means (31 to 35, 303) configured to laterally or longitudinally divide the laminated dough piece or reversed laminated dough piece asymmetrically into a first (211, 311) and second (212, 312) laminated dough piece or first and second reversed laminated dough piece and one or more calibrators (4) configured to reduce said first and second laminated dough pieces or reversed laminated dough pieces into dough pieces having a substantially equal surface area and shape; or one or more cutting means (36) configured to laterally divide the laminated dough piece or reversed laminated dough piece into a first (201) and second (202) laminated dough piece or first and second reversed laminated dough piece such that a second laminated dough piece or reversed laminated dough piece (202) is obtained that has a surface area (502) that is approximately a multiple of the surface area (501) of the first laminated dough piece or reversed laminated dough piece (201) and one or more folding stations to fold the second laminated dough piece into a second laminated dough piece or second reversed laminated dough piece (202') having a substantially equal surface area and shape to the first laminated dough piece (201');
- one or more conveyor belts configured to continuously transport the first and second laminated dough pieces or first and second reversed laminated dough pieces;
- one or more pumps or depositing/dispensing means configured to dispose one or more filling compositions on the first laminated dough piece (20 1' or 211');
- one or more means configured to place the second laminated dough piece or second reversed laminated dough piece on the filling composition to obtain a filled laminated dough product or filled reversed laminated dough product (9, 330).

For the purposes of the invention, the term "conveyor belt" as used herein in relation to the production line for producing inversed laminated dough encompasses any conveying system that is able to transfer the sheet of laminated dough over the production line. It can typically comprise multiple separate elements connecting the other means and devices on the line such as extruders, calibrators, laminators or folders, etc. and enabling the transfer of the sheet to said subsequent elements. A skilled person appreciates that "continuously transport" indicates a capacity to "move without interruption", or "move without human intervention".

Optionally, the production line comprises a further cutting means configured to shape the filled laminated dough piece or reversed laminated dough piece into a final shape, or configured to trim the filled laminated dough product or reversed laminated dough piece in order to remove excess laminated dough pieces or excess reversed laminated dough pieces.

Optionally, the production line comprises one or more flouring units configured for providing flour on the laminated dough piece or reversed laminated dough piece (202' 212' or 312).

Optionally, the production line comprises means for providing the second laminated dough piece or the second reversed laminated dough piece (202' 212' or 312) with a glazing or egg-washing.

Optionally, the production line comprises means for providing the second laminated dough piece or the second reversed laminated dough piece (202' 212' or 312) with a decorative marking or scratching.

Optionally, all components of the production line work within a temperature range of between 0°C and 20°C, preferably between 5°C and 15°C.

A skilled person appreciates that the production line described herein is a production line substantially requiring no human intervention on the line during the production.

The production lines described in the above embodiments start from a laminated or reversed laminated dough piece (2, 20, 301). However, the invention equally envisages production lines that include components for producing said laminated dough piece or reversed laminated dough piece. Hence, optionally the production line comprises at the start of the production line:
- one or more dough kneaders, preparing the basic dough composition;
   one or more dough extruder(s) located at the start of the production line comprising a feeding means for the base dough composition and an extrusion means configured to uniformly form a sheet of dough, said pump and extrusion means being configured so as to form a continuous sheet of laminated dough piece comprising a sheet of fat between two sheets of dough or configured so as to form a continuous sheet of reversed laminated dough piece comprising a sheet of dough comprised between two sheets of fat;
- a fat composition pump located at the start of the production line comprising a feeding means for adding fat composition to the pump and an extrusion means configured to uniformly form a sheet of fat;
- one or more conveyor belts configured to continuously transport the sheet of laminated dough piece or reversed laminated dough piece at a speed matching that of the dough composition extruder and fat composition pump;
- optionally one or more flouring units located downstream of the fat composition pump and dough composition extruder configured for providing flour on the laminated dough piece or reversed laminated dough piece;
- one or more (transverse) calibrators or multirollers for stretching and reducing the obtained laminated dough piece or reversed laminated dough piece;
- a folding means configured to fold the laminated dough piece or reversed laminated dough piece several times, thereby forming a multiple layer laminated dough piece or reversed laminated dough piece;
- one or more (transverse) calibrators or multirollers for stretching and reducing the obtained multiple layer laminated dough piece or reversed laminated dough piece; optionally one or more flouring units located upstream of certain or all calibrators for providing flour on the laminated dough piece or reversed laminated dough piece;
- optionally one or more brushes to remove excess flour from said laminated dough piece or reversed laminated dough piece at the end of the production line.

In certain embodiments, the fat composition pump is a butter pump. In certain embodiments, the fat composition pump is a vacuum pump. In further embodiments, the fat composition pump is a vacuum butter pump.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as follows in the spirit and broad scope of the appended claims. The herein disclosed aspects and embodiments of the invention are further supported by the following non-limiting examples. The following specific experimental examples are provided in support of the claimed invention but are not to be seen as limiting the scope of the invention.

### EXAMPLES

### Example 1. Production of improved filled laminated dough products.

### 1.1. Standard method of making King cake:

A general and representative continuous process for producing King cake according to the art is outlined below.
- Kneading of flour, water, and salt ("pétrissage") into base dough ("détrempe"). Kneader trimmings are incorporated back in the production line.
- Extrusion of the based dough out of the kneader in the form of a strip of dough before subjecting to successive steps of reducing thickness using sizers ("calibreurs") or multirollers.
- Lateral division of this strip of dough in 2 distinct strips of dough in order to create an upper strip of dough and a lower strip of dough.
- Extrusion of puff pastry butter, or any other fat (e.g. margarine, margarine butter mix) using a butter pump, optionally a vacuum butter pump.
- The extruded butter or fat obtained by means of the butter pump is introduced between the 2 preceding strips of dough, forming a sandwich-like architecture. The 2 strips of dough are conjoined on either side of the butter layer.
- The sandwich-like dough-fat-dough structure is rolled and subjected to further reductions in thickness by successive (transverse) calibrators ("calibreurs") and/or multirollers, and folding by 3 successive folding or tiling stations to obtain a laminated dough piece ("puff pastry"). The number of butter (fat) layers in the laminated dough piece is not limiting for the production process but is typically from about 64 to 216 (e.g. 2 folds then 3 folds then 2 folds i.e. 96 layers).
- The laminated dough piece is rolled to its final thickness to obtain the final laminated dough piece ("puff pastry") ("abaisse finale").
- For the reference product, the final laminated dough piece is cut lengthwise into two strips of dough of equivalent (equal) thickness and width which will form the bottom laminated dough piece and the top laminated dough piece of the raw, ready-to-bake filled laminated dough product.
- The top laminated dough piece is physically marked continuously by scratching the dough layer in order to create the decorative markings ("rayage") that improve the visual aspect of the final filled laminated dough piece.
- On the bottom laminated dough piece, a filling (such as e.g. frangipane, almond cream, or apple compote) is placed. The top laminated dough piece is placed on top of the filling.
- The final shape of the filled laminated dough product is given by a cutting device which cuts and shapes the "top laminated dough piece/ filling /bottom laminated dough piece" combination.
- Liquid egg type gilding is finally added as a glazing or egg-washing ("dorure") on the filled laminated dough product.

### 1.2. Process of the invention:

The innovation introduced by the inventors resides in using a bottom laminated dough layer and top laminated dough layer of different thicknesses in the final raw, ready-to-bake laminated dough product.

More particularly, a bottom laminated dough layer is used that is thinner than the top laminated dough layer.

Two exemplary and non-limiting methods for achieving a bottom laminated dough piece and top laminated dough piece of different thicknesses which can readily be implemented in an industrial, continuous process are hereby provided.

1.2.1. In a first method, during the cutting of the initial laminated dough piece into a first (bottom) laminated dough piece and a second (top) laminated dough piece, instead of cutting strictly longitudinally in the centre of the piece to obtain identical widths, an asymmetrical cut is made such that a second laminated dough piece pastry is obtained that is wider than first laminated dough piece. An illustrative example of an asymmetrical cut is a 2/3 to 1/3 division.

The wider second (top) laminated dough piece is not reduced, while the smaller first (bottom) laminated dough is reduced using sizers, (transverse) calibrators or (multi-)rollers to arrive at a substantially identical surface area as the second (top) laminated dough piece. A reduction in thickness of the bottom laminated dough piece is thus obtained by mechanical means.

As indicated above, an asymmetrical cut is made, but the exact division of the first and second laminated dough piece is not particularly limiting for the invention. Exemplary divisions of top and bottom laminated dough pieces are provided in Table 1.

**Table 1. Examples of different cuts and their impact on the height of top and bottom crust after baking in a King cake.**

| **Diameter of cake (mm)** | **Longitudinal cut position** | **Thickness of top and bottom crust (mm)** | **Longitudinal cut position (mm)** | **Thickness of bottom crust (mm)** | **Thickness of top crust (mm)** |
|---|---|---|---|---|---|
| 120 | 50/50 | 2.6 | 66/33 | 1,7 | 3,5 |
| 180 | 50/50 | 3.2 | 66/33 | 2,1 | 4,2 |
| 220 | 50/50 | 2.7 | 66/33 | 1,8 | 3,6 |
| 280 | 50/50 | 2.9 | 66/33 | 1,9 | 3,9 |
| 320 | 50/50 | 2.7 | 66/33 | 1,8 | 3,6 |

1.2.2. In a second, alternative method the initial laminated dough piece is reduced to a suitable thickness (e.g. 2 mm) and a continuous longitudinal cut of this strip of dough is made. For example 1/3 of the width for the bottom laminated dough piece of the filled laminated dough product (thickness X mm, such as 2 mm) and 2/3 of the width for the top laminated dough piece of the filled laminated dough product (thickness X, such as 2 mm). In a next step, the top laminated dough piece is folded on itself such that the thickness of the top laminated dough layer doubles (2X, for example 4 mm). The raw, ready-to-bake filled laminated dough product can then be provided by placing the filling on the bottom laminated dough piece and placing the top laminated dough piece above.

The above approaches for producing laminated dough products result in improved products, as was evaluated by an expert panel. Indeed, after baking the filled laminated dough products according to the method of the invention, the final product is characterised by more volume because of an improved development of the laminated dough, more crispness in the mouth (i.e. improved mouthfeel), improved visual appearance of the decorative markings on the top laminated dough layer and thus an improved overall appearance of the final product.

Notably, it was found that the quality of the product is not affected by the lower thickness of the lower pastry because the lamination of the dough is not expressed during cooking: the bottom laminated dough layer is blocked by the cooking plate on the lower side and by the filling on the upper side. In addition, transferring part of the thickness of the bottom layer to the top layer of the product maximizes the quality of the top puff pastry layer.

Figures 1 to 3 demonstrate the above-described effects (V1 compared to Reference products).

### Example 2. Waste management

Current industrial continuous production lines have the disadvantage that, particularly for substantially circular or elliptical shaped products, a considerable amount of excess laminated dough (waste dough, trimmings, "rognure") is obtained after cutting the laminated dough pieces into their desired shape. Unexpectedly, the inventors have found that qualitative filled laminated dough products can be obtained when using as bottom dough piece a reworked piece of dough produced from these waste dough pieces. Hence, industrial and continuous methods to produce such filled laminated dough products have been investigated by the inventors, who found that such filled laminated dough products having a crust made 100% of line returns or non-conforming pastry scraps also have an adequate quality for consumption. Concrete, the waste dough pieces are collected and reworked by an extruder before reduction to the desired final thickness for the bottom pastry dough.

In this Example, the lower crust of the galette is completely or essentially completely made of waste dough pieces and the upper crust of the product is made up of 100% puff pastry. The waste or trimmings contain proportionally more butter (since these are derived from laminated dough pieces), resulting in a crispy texture, improved buttery taste and development.

Figures 1 to 3 demonstrate the feasibility of this approach that results in less waste generation during production (V2 products).

### Example 3. Combination of Examples 1 and 2 and final considerations

Although the teachings of Example 1 and Example 2 can be combined as shown in Figures 1 to 3, superior quality as evaluated by an expert panel was obtained for the V1 products. The final ranking was the following: V2 (4 mm + 2 mm reworked waste) < Reference product < V1 (4 mm + 2 mm laminated dough pieces). The expert panel evaluation is summarized in Table 2. The inventors conclude that both the V1 and the V2 products offer advantages that were not previously obtained in the art in industrial continuous production processes of filled laminated dough products.

**Table 2. Expert panel evaluation. SD= standard deviation.**

| **Product** | | **Global Overliking* (1-5)** | | **Texture (1-5)** | | **Preference** | | | **Comments** | | | |
|---|---|---|---|---|---|---|---|---|---|---|---|---|
| | | mean | SD | mean | SD | 1st | 2nd | 3rd | negative evaluation crust | generally negative evaluation | generally positive evaluation | positive evaluation crust |
| **V2** | 4+2 mm reworked shaving | 3,4 | 0,7 | 3,4 | 0,9 | 19% | 38% | 43% | 8 | 5 | 7 | 2 |
| **V1** | 4+2 mm laminated dough piece | 4 | 0,8 | 3,8 | 1 | 48% | 29% | 24% | 4 | 5 | 7 | 4 |
| **Ref.** | Artisanal | 3,8 | 0,9 | 3,8 | 1 | 33% | 33% | 33% | 3 | 5 | 6 | 6 |
| **Evaluation** | | mild preference for V1 but no significant difference | | no significant difference | | V1 is generally the most preferred type of product | | | V2 product is the least appreciated | | | |

| | | | | | | | | | | | | |
|---|---|---|---|---|---|---|---|---|---|---|---|---|
| AGB : Appréciation Globale en Bouche = global overliking | | | | | | | | | | | | |

### Example 4: Comparison of two versions of the King cake of the invention to a reference king cake.

The reference King cake is made according to example 1.1.

The trial cakes were made in a similar manner, except that the dough strip was cut asymmetrically in a longitudinal manner (parallel to the transport direction), such that laminated dough strips are obtained of different width or surface in general (in a 46/54 or 44/56 ratio of bottom layer surface vs. top layer surface). The smaller dough piece or strip is the further reduced and stretched out (by using multiroller or transverse calibrator) to match the same surface area as the larger dough piece, thereby reducing its thickness but maintaining the same number of fat layers. The latter, thinner, piece will form the bottom dough piece of the final product, onto which the filling is deposited and covered by the top, thicker dough piece.

After baking the prepared products, they are compared in terms of visibility of the markings (incision - drawing or "rayage") and from Figure 4, it becomes clear that in the two trial cakes, the inscription drawing is more pronounced. Also the development of the top layer is compared and in the lower panel of Figure 4, it is clear that the different layers of laminated dough are more pronounced in the trial products than in the reference product.

When looking at cross sections of the King cakes in Figure 5, the bracket indicates the thickness of the top layer and one can clearly see that the two trial products have a more developed top layer, i.e. the different layers of laminated dough are more open than in the reference product.

Also a sensory analysis of a trained test panel on the three King cakes was performed and as can be seen from the graph in Figure 6, the two trial cakes score significantly better in the visual aspects of layer development (outside and inside), and in depth of the inscription drawings. The baking of the bottom layer was significantly better for the 44/56 cake only, which may be due to the somewhat higher volume of dough used in the 46/54 product. The taste of the three cakes was not found to be significantly different by the panel (not shown).

Also in Figure 7, a cross section of the King cakes make it clear that the top layer of laminated dough is much more developed (one can more easily distinguish the different layers) in the two trial products, versus the reference product.

### Example 5. Principle of the invention applied to apple turnovers

Similar to King cakes, also turnovers such as Apple turnovers can be made using the technology according to the invention. Apple turnovers (weight from 40g to 150g) are typically made using the following **recipe**:
∘ A puff-pastry dough (unleavened dough): 75% to 55%
   - Ingredients are : flour, water, butter, salt
   - Butter content from 26% to 37%
∘ A filling : 25% to 45%
   - Apple compote, apple compote with apple pieces
   - Alternative fillings can be: Custard cream, chocolate filling, fruit filling, caramel filling....
∘ Then egg wash sprayed on the raw dough.

### 5.1. Standard process of making an apple turnover:

Normally apple turnovers are made industrially from the puff pastry dough which is folded on itself during final shaping :
o The dough strip is transported over a conveyor belt (whereby the width of this dough strip is double in size of raw apple turnover);
o Filling (e.g. apple compote or other filling) is added discontinuously on half of the width of said dough strip;
o The dough strip is folded into 2 on itself, thereby enveloping the filling;
o A D-shape or triangle shape is cut out of said dough by a cutting device and the rework is removed. Optionally, this rework can be reused and mixed with the original dough;
o Finally, the raw apple turnover is sprayed with egg wash.

### 5.2. Process according to the invention:

o The puff pastry dough (see recipe above) is divided into 2 strips, one becoming upper dough, the other lower dough (which is thinner than the upper dough layer), as is done for the King cake in e.g. Example 1.2.1 or 1.2.2.;
o adding discontinuously apple compote (or any other) filling on top of this lower dough;
o then adding the upper dough, which is thicker than the lower dough;
o then final cutting with D-shape or triangular cutting tool
o Finally, the raw apple turnover is sprayed with egg wash.

## Claims

1. A process (1, 10) for producing a ready-to-bake filled laminated dough product having (9, or 330) a filling (7), comprising the steps of:
- providing a first laminated dough piece (201' 211' or 311') and a second laminating dough piece (202 212' or 312) having an equal surface area, wherein the thickness (62 or 602) of the first laminated dough piece is less than the thickness (61 or 601) of the second laminated dough piece;
- providing a filling composition on the first laminated dough piece (201' 211' or 311'), and covering the filling composition with the second laminated dough piece (202 212' or 312) to obtain said laminated dough product (9, or 330).

2. The method according to claim 1, wherein the first (201' 211' or 311') and second (202 212' or 312) laminated dough pieces are obtained by the steps of:
(i) providing a laminated dough piece (2 20 or 301);
(iia) laterally dividing said laminated dough piece (2 or 20) into a first laminated dough piece (211) and a second laminated dough piece (212), wherein the surface area of said first laminated dough piece is smaller than the surface area of the second laminated dough piece, and reducing the first laminated dough piece and the second laminated dough pieces to an equal final surface area for said raw laminated dough product by means of one or more calibrators or multirollers (4); or
(iib) dividing the laminated dough piece (2 or 20) into a first laminated dough piece (201) and a second laminated dough (202) of equal surface area and shape by folding the second laminated dough piece at least once; or
(iic) asymmetrically cutting said dough piece longitudinally by one or more cutting means (303) into a first laminated dough piece (311) and a second laminated dough piece (312), wherein the second laminated dough piece (312) has a width (304) that is wider than the width (305) of the first laminated dough piece (311);
separating said two dough pieces from each other;
reducing the first laminated dough piece (311) by one or more transverse calibrators (306 and 306') rolling over the dough in a direction (307 and 307') substantially perpendicular to the direction of transport (302) of the dough piece, thereby reducing said first laminated dough piece (311) in thickness and widening it to approximately the same width (304) of the second laminated dough piece, resulting in a reduced first laminated dough piece (311') having a thickness that is reduced by at least about 5%, preferably at least about 10%, more preferably at least about 20%, more preferably at least about 30%, more preferably at least about 40%, more preferably at least about 50% when compared to the thickness of the second laminated dough piece (312).

3. The method according to any one of the preceding claims, wherein the laminated dough product (9, 330) has a substantially symmetrical shape, preferably wherein the laminated dough product has a substantially circular, rectangular, square, triangular, elliptical, or D-shape, or is star-shaped, moon-shaped, cloud-shaped, or nut-shaped.

4. The method according to any one of the preceding claims, wherein the laminated dough product (9, 330) having a filling (7) is a king cake ("galette de rois") or a turnover, such as an apple turnover.

5. The method according to any one of the preceding claims, wherein the method further comprises a step of providing a marking or incision drawing (rayage) on the second laminated dough piece (202' 212' or 312) and/or a step of glazing or egg-washing of the second laminated dough piece (202' 212' or 312).

6. The method according to any one of the preceding claims, wherein said first and/or the second laminated dough piece comprises at least 64 fat composition layers, preferably at least 96 fat composition layers.

7. The method according to any one of the preceding claims, wherein said first and/or the second laminated dough piece comprises 216 fat composition layers or less.

8. The method according to any one of the preceding claims, wherein said second laminated dough piece comprises at least twice the number of fat composition layers when compared to said first laminated dough piece.

9. The method according to any one of the preceding claims, wherein said second laminated dough piece comprises the same number of fat composition layers when compared to said first laminated dough piece.

10. The method according to any one of the preceding claims, wherein the laminated dough piece is a reversed laminated dough piece ("feuilletage inversé product").

11. The method according to any one of the preceding claims, wherein the filling composition is a frangipane filling, caramel-frangipane filling, caramel filling, almond cream filling, apple pieces and/or apple compote filling, Custard cream filling, chocolate filling, or other fruit (compote) filling composition.

12. The method according to any one of claims 1 to 11, additionally comprising a step of freezing the laminated dough product obtained, thereby obtaining a frozen ready-to-bake laminated dough product.

13. The method according to any one of claims 1 to 12, additionally comprising a step of baking the laminated dough product obtained.

14. A ready-to-bake, frozen ready-to-bake or baked laminated dough product having a filling (7), comprising a filling composition enclosed between a top laminated dough piece and a bottom laminated dough piece, wherein the bottom laminated dough piece is thinner when compared to the top laminated dough piece, preferably obtained according to any one of the methods of claims 1 to 13.

15. The laminated dough product having a filling, **characterised in that** it is a turnover having a filling selected from the group of: frangipane filling, caramel-frangipane filling, caramel filling, almond cream filling, apple pieces and/or apple compote filling, Custard cream filling, chocolate filling, and other fruit (compote) filling composition, more preferably an apple turnover ("chaussons aux pommes"), or **in that** it is a King cake.

16. A production line for continuously producing ready-to-bake laminated dough products according to the method according to any one of claims 1 to 11, comprising the following elements:
- one or more conveyor belts configured to continuously transport a laminated dough piece or reversed laminated dough piece;
- (i) one or more cutting means (31 to 36, 303) configured to laterally divide the laminated dough piece or reversed laminated dough piece asymmetrically into a first and second laminated dough piece or first and second reversed laminated dough piece and one or more calibrators or reverse calibrators (4) configured to reduce said first and second laminated dough pieces or reversed laminated dough pieces into dough pieces having a substantially equal surface area and shape; or
(ii) one or more cutting means (301) configured to laterally divide the laminated dough piece or reversed laminated dough piece into a first (201) and second (202) laminated dough piece or first and second reversed laminated dough piece such that a second laminated dough piece or reversed laminated dough piece is obtained that has a surface area that is approximately a multiplicity of the surface area of the first laminated dough piece or reversed laminated dough piece and one or more folding stations to fold the second laminated dough piece into a second laminated dough piece or second reversed laminated dough piece having a substantially equal surface area and shape to the first laminated dough piece; or
(iii) one or more cutting means (303) configured to asymmetrically longitudinally divide the laminated dough piece into a first laminated dough piece (311) and a second laminated dough piece (312), wherein the cutting means is positioned such that the second laminated dough piece (312) has a width (304) that is wider than the width (305) of the first laminated dough piece (311);
- one or more conveyor belts configured to continuously transport the first and second laminated dough pieces or first and second reversed laminated dough pieces;
- optionally and preferably in case of option (iii) above, one or more transverse calibrators rolling over the dough in a direction (307 and 307') substantially perpendicular to the direction (302) of the transport or movement of the laminated dough piece, wherein said transverse calibrator(s) are configured to reduce the first laminated dough piece in thickness (311 > 311') and to widen it to approximately the same width (304) of the second dough piece.
- one or more pumps or disposing means configured to dispose one or more filling compositions (7) on the first laminated dough piece or first reversed laminated dough piece (201' 211' or 311');
- one or more means configured to place the second laminated dough piece or second reversed laminated dough piece (202' 212' or 312) on the filling composition to obtain a filled laminated dough product or filled reversed laminated dough product. Typically said means is a conveyer belt that is guiding the second dough layer onto the first dough layer with said filling.
- optionally further comprising a further cutting means configured to shape the filled laminated dough piece or reversed laminated dough piece into a final shape of the product comprising the top layer, the filling and bottom layer( 9, 330).
